# EUROPEAN PATENT SPECIFICATION

(11) **EP 4 579 103 B1**
(45) Date of publication and mention of the grant of the patent: **21.10.2026**
(21) Application number: 24220898.1
(22) Date of filing: 18.12.2024
(51) Int. Cl.: F16H 21/44

(54) **LINKAGE ASSEMBLY SUPPORTING A MATERIAL LAYER THAT MAINTAINS A CONSTANT LENGTH ACROSS A RANGE OF MOTION**
VERBINDUNGSANORDNUNG ZUR UNTERSTÜTZUNG EINER MATERIALSCHICHT, DIE ÜBER EINEN BEWEGUNGSBEREICH EINE KONSTANTE LÄNGE BEIBEHÄLT
ENSEMBLE DE LIAISON SUPPORTANT UNE COUCHE DE MATÉRIAU QUI MAINTIENT UNE LONGUEUR CONSTANTE SUR UNE PLAGE DE MOUVEMENT

(30) Priority: 20.12.2023 US 202363612940 P; 04.06.2024 US 202418733720
(43) Date of publication of application: 02.07.2025
(73) Proprietor: The Boeing Company, Arlington, VA 22202 (US)
(72) Inventor: HENRY, Christopher P, ARLINGTON, 22202 (US); SEVERANCE, Jensen, ARLINGTON, 22202 (US)
(74) Representative: Plasseraud IP

(56) References cited:
- JP-A- S55 133 987
- US-A1- 2008 309 122
- US-A1- 2009 212 594
- US-A1- 2018 266 154

## Description

### CROSS REFERENCE TO RELATED APPLICATIONS

This application claims priority to U.S. Application Serial Number 63/612,940, filed December 20, 2023, and U.S. Application Serial Number 18/733,720, filed June 4, 2024.

### FIELD

The disclosed subject matter relates generally to a linkage assembly that includes a plurality of linkages, and more particularly to a linkage assembly supporting a material layer that maintains a constant length across a range of motion of the linkage assembly between two rigid states.

### BACKGROUND

Machines can incorporate a wide variety of mechanical linkages to transfer mechanical work, implement a mechanical function, or reconfigure the machine for an intended purpose. As an example, a machine can include a linkage assembly of two or more linkages that are coupled to each other via a series of joints. Joints by which two neighboring linkages are coupled to each other can enable rotation and/or translation of one linkage relative to another linkage.

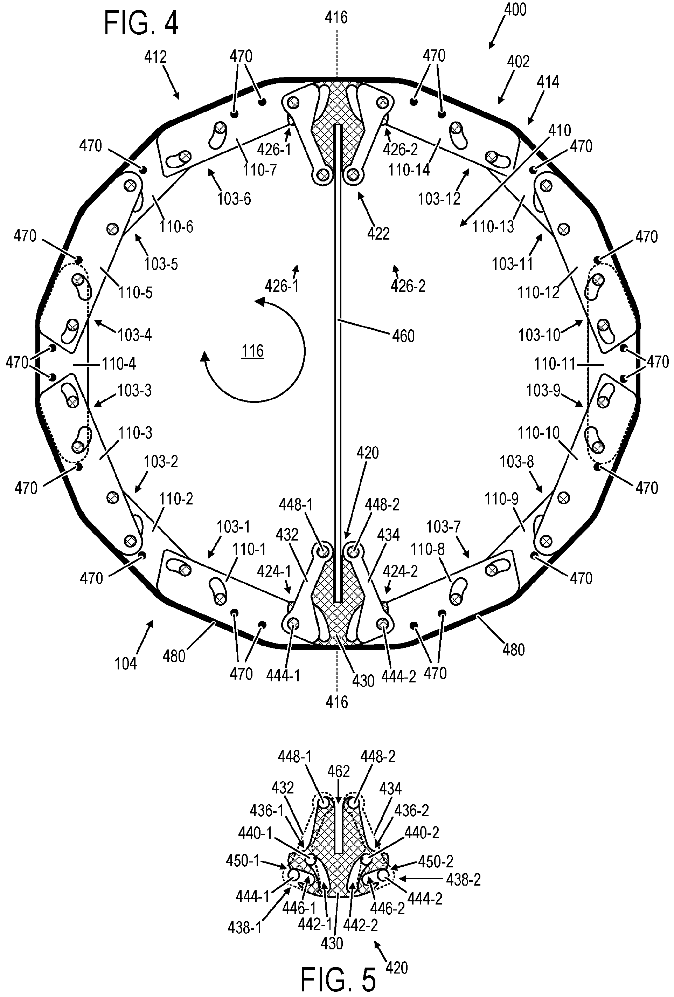

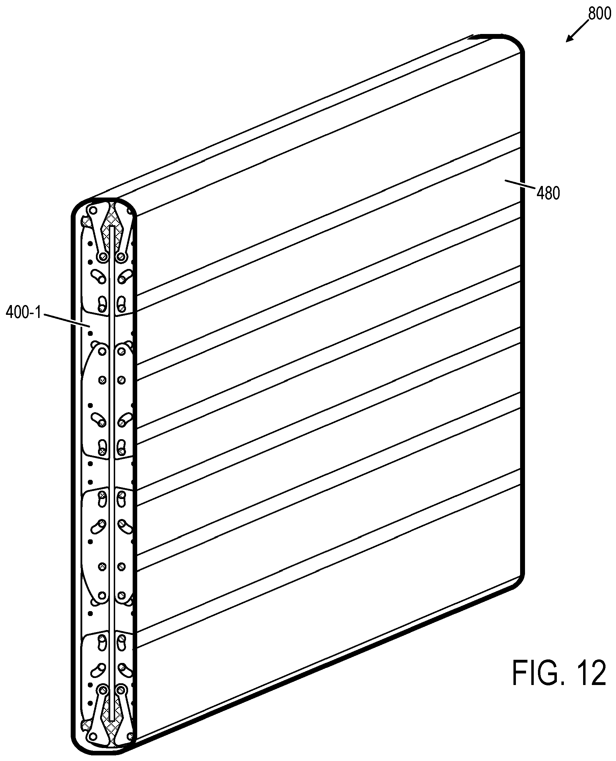

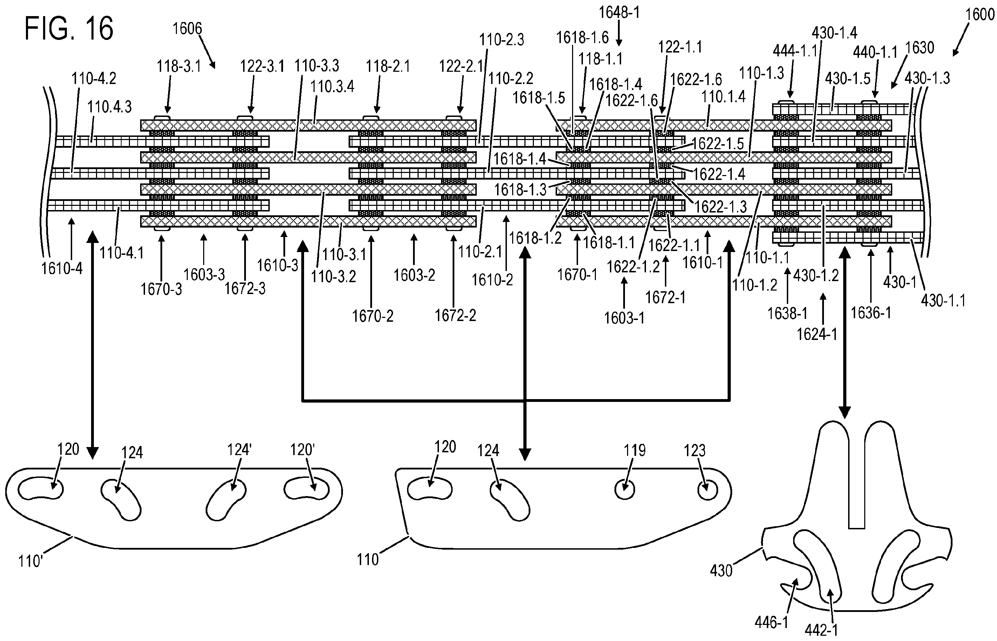

US 2009/212594 A1, in accordance with its abstract, states a drag reducing apparatus for use with vehicles having surfaces that are not streamlined. The apparatus includes an exterior cover that forms a drag reducing shape when the apparatus is fully extended. The apparatus can be retracted to a space saving configuration. A scissors linkage extends and retracts the apparatus. The scissors linkage can be motorized, and the motor can extend the scissors linkage by turning in a first direction and can retract the apparatus by turning in a second direction. The scissors linkage can hold the exterior cover taut when the apparatus is fully extended. The scissors linkage can support the exterior cover at intermediate locations when the apparatus is not fully extended. The apparatus can include support linkages and intermediate moveable members that support the exterior cover and define the drag reducing shape. Further, it shows, in terms of claim 1, a linkage assembly (see Figs. 12, 16), comprising: a first set of co-mounted linkages (3111) rotatably coupled to a second set of co-mounted linkages (4111) via a hinge formed by a first set of joints and a second set of joints; and a material layer (304, 306, 307, Fig. 5) is mounted to an exterior edge of the first set of co-mounted linkages and the second set of co-mounted linkages, wherein the material layer is configured to maintain a constant length across a range of motion of the first set of co-mounted linkages and the second set of co-mounted linkages relative to each other within a plane of rotation.

US 2008/309122 A1, in accordance with its abstract, states an aerodynamic structure attached to the rear face of a truck cargo body, which rear typically contains a door assembly, with a plurality of doors that swing open on hinges, or a single, full-width door, which rolls upwardly.

### SUMMARY

In a particular implementation, a linkage assembly is proposed as per appended claims 1 to 10.

In another particular implementation, a reconfigurable structure is proposed as per appended claims 11 to 15.

The material layer maintains a constant length across a range of motion of each linkage assembly, thereby reducing or eliminating in-plane strain within the material layer across the range of motion. In an example, the reconfigurable structure can provide a first configuration corresponding to a curved or annular tube shape for a fluid vessel, conduit, or other suitable structure, and a second configuration corresponding to a flattened shape. The flattened shape of the second configuration can be used for storage and transport of the reconfigurable structure.

The features, functions, and advantages described herein can be achieved independently in various implementations or may be combined in yet other implementations, further details of which can be found with reference to the following description and drawings. This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### BRIEF DESCRIPTION OF THE DRAWINGS

FIG. 1 depicts an example linkage assembly that includes a plurality of linkages, including at least a pair of linkages that are rotatably coupled to each other via a hinge.
FIG. 2 depicts the linkage assembly of FIG. 1 in which the pair of linkages have a first configuration.
FIG. 3 depicts the linkage assembly of FIG. 1 in which the pair of linkages have a second configuration that differs from the first configuration of FIG. 2.
FIG. 4 depicts another example linkage assembly having a first configuration and that includes the linkage assembly of FIG. 1 as a sub-assembly.
FIG. 5 depicts aspects of a base linkage sub-assembly of the linkage assembly of FIG. 4 for the first configuration.
FIG. 6 depicts the linkage assembly of FIG. 4 having a second configuration that differs from the first configuration of FIG. 4.
FIG. 7 depicts aspects of the base linkage sub-assembly of the linkage assembly of FIG. 6 for the second configuration.
FIG. 8 depicts an example reconfigurable structure having a first configuration and that includes multiple instances of the linkage assembly of FIG. 4.
FIGS. 9, 10, and 11 depict additional aspects of the reconfigurable structure of FIG. 8.
FIG. 12 depicts the reconfigurable structure of FIG. 8 having a second configuration that differs from the first configuration of FIG. 8.
FIG. 13 depicts another example linkage assembly having a first configuration and that includes the linkage assembly of FIG. 1 as a sub-assembly.
FIG. 14 depicts the linkage assembly of FIG. 13 having a second configuration that differs from the first configuration of FIG. 13.
FIG. 15 depicts an example truss by which a material layer can be mounted to linkages of a reconfigurable structure.
FIG. 16 depicts a portion of an example linkage assembly that forms a linkage chain in which each set of co-mounted linkages represents an individual linkage of previously described the linkage assembly of FIG. 4.
FIG. 17 depicts a portion of an example reconfigurable structure that includes multiple instances of the linkage assembly of FIG. 16
FIGS. 18 and 19 depict a portion of a linkage assembly that includes a representative set of co-mounted linkages.
FIG. 20 depicts an example of a linkage configuration of FIG. 1 incorporating keyways.

### DETAILED DESCRIPTION

A linkage assembly is disclosed that includes a plurality of linkages. The linkage assembly can form part of a reconfigurable structure, such as a fluid vessel configured to hold or transport a fluid in a liquid phase, vapor phase and/or gas phase, a conduit, an airfoil, a hydrofoil, a control surface, a wheel or other suitable structure. Linkages of the linkage assembly can be rotatably coupled to each other in a manner that enables a material layer mounted to an exterior edge of the linkage assembly to maintain a constant length across a range of motion of the linkages. By maintaining a constant length of the material layer across a range of motion of the linkages, in-plane strain within the material layer can be reduced or eliminated. This configuration enables the material layer to be formed from materials having a relatively high modulus of elasticity, such as metals including aluminum and steel, as examples.

In an example, a plurality of linkages of the linkage assembly includes at least a pair of linkages that are rotatably coupled to each other via a hinge formed by a first pin-in-slot joint and a second pin-in-slot joint. The first pin-in-slot joint includes a first curved slot formed within a (first) linkage of the pair of linkages and a first pin of another (second) linkage of the pair of linkages that is retained within the first curved slot. The second pin-in-slot joint includes a second curved slot formed within the (first) linkage of the pair of linkages and a second pin of another (second) linkage of the pair of linkages that is retained within the second curved slot. The hinge formed by the first pin-in-slot joint and the second pin-in-slot joint takes the form of a virtual joint having a virtual pivot located on the material layer, enabling the material layer to maintain a constant length across a range of motion of the linkages.

The disclosed linkage assemblies and reconfigurable structures offer the potential to address various issues. For example, within the context of fluid vessels such as fuel tanks, existing fuel tanks compatible with high acceleration aircraft are not able to be stowed in a flattened configuration when not deployed and thus occupy significant volume during storage and transport. The disclosed linkage assemblies and reconfigurable structures (e.g., a fluid vessel) can be reconfigured to a flattened shape that is many times more compact than its deployed state while also maintaining a competitive fluid holding capacity in the deployed state. In at least some examples, the disclosed reconfigurable structures can be flat packed for storage and transport when not deployed for use.

Furthermore, within the context of an airfoil, a hydrofoil, or a control surface, the reconfigurable structures disclosed herein can provide a range of aerodynamic or hydrodynamic performance characteristics through rotation or manipulation of the various linkages that support the material layer. As yet another example, the reconfigurable structures disclosed herein can take the form of a wheel that can be deployed for use on a vehicle, while also enabling the wheel to be flattened for storage and transport. In each of these examples, the material layer can maintain a constant length across a range of motion of the linkages, thereby enabling an expanded range of materials from which the material layer can be formed. The example linkage assemblies disclosed herein can include linkages having a repeating configuration, enabling the linkages to be manufactured using the same techniques and tooling.

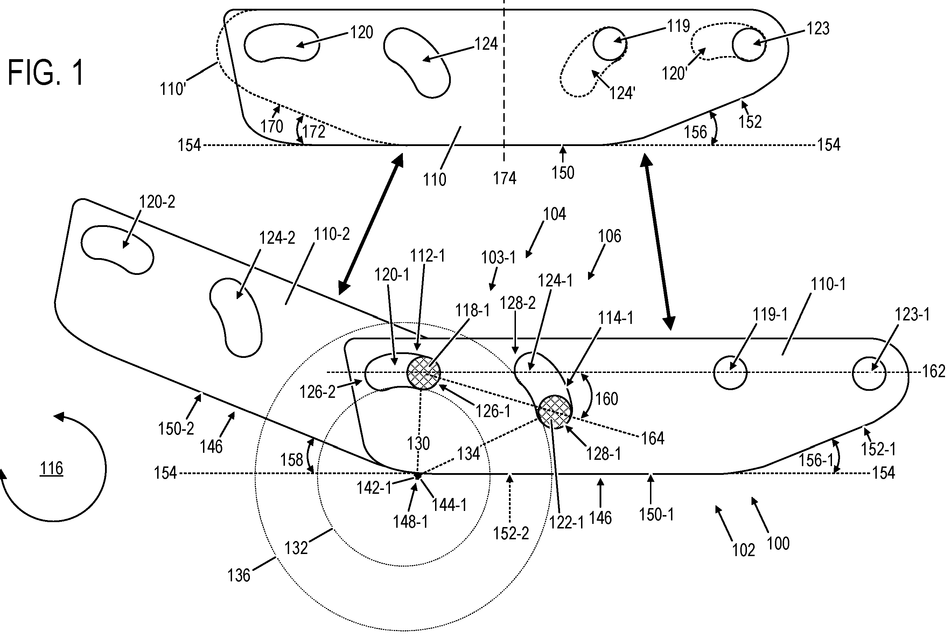

FIG. 1 depicts an example linkage assembly 100 that includes a plurality of linkages 102. The plurality of linkages 102 includes at least a pair of linkages 104 rotatably coupled to each other that form part of a linkage chain 106. In the example of FIG. 1, first linkage 110-1 and second linkage 110-2 of the pair of linkages 104 are neighboring linkages of linkage chain 106. As described in further detail herein, the plurality of linkages 102 can include additional linkages rotatably coupled to each other to form linkage chain 106 in combination with the pair of linkages 104. Linkage assembly 100, including the pair of linkages 104 can form part of a reconfigurable structure in combination with one or more other linkages, such as described with reference to FIGS. 4, 6, 13, and 14 as examples.

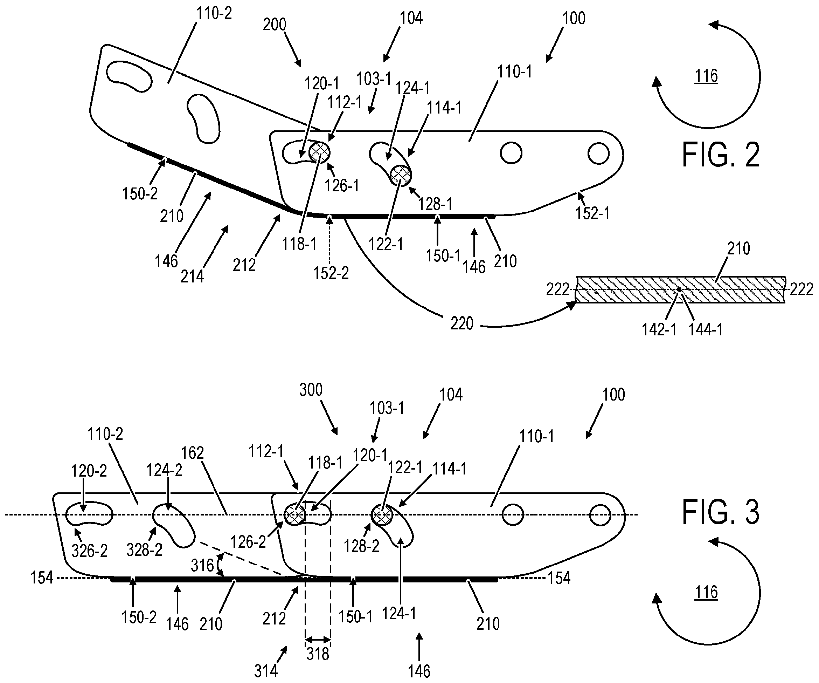

In the example of FIG. 1, first linkage 110-1 and second linkage 110-2 are rotatably coupled to each other via a hinge 103-1. Hinge 103-1 enables first linkage 110-1 and second linkage 110-2 to rotate relative to each other within a plane of rotation 116 to provide different configurations of linkage assembly 100, as described in further detail with reference to FIGS. 2 and 3.

First linkage 110-1, second linkage 110-2, and other linkages of linkage chain 106 can each refer to an instance of a linkage configuration 110, an example of which is depicted in FIG. 1. In at least some examples, some or all of the linkages of linkage chain 106, including first linkage 110-1 and second linkage 110-2 each have the same shape and features as linkage configuration 110. Accordingly, aspects of the various linkages disclosed herein are at times described in further detail herein with reference to linkage configuration 110.

In the example of FIG. 1, hinge 103-1 rotatably coupling first linkage 110-1 and second linkage 110-2 to each other includes a first pin-in-slot joint 112-1 and a second pin-in-slot joint 114-1. First pin-in-slot joint 112-1 includes a first curved slot 120-1 and a first pin 118-1 that is retained within first curved slot 120-1. In this configuration, first pin 118-1 can travel along and rotate within first curved slot 120-1 as the pair of linkages 104 are rotated relative to each other. In the example configuration of the pair of linkages 104 depicted in FIG. 1, first pin 118-1 is located at a first position at a first terminal end 126-1 of first curved slot 120-1 that opposes a second terminal end 126-2 of the first curved slot.

In the example depicted in FIG. 1, first curved slot 120-1 is formed within or otherwise defined by first linkage 110-1. First curved slot 120-1 is an instance of first curved slot 120 of linkage configuration 110. As a first example, first pin 118-1 passes through and is retained within a first circular opening (e.g., depicted at 119 with reference to linkage configuration 110) that is formed within or defined by second linkage 110-2. As a second example, first pin 118-1 is mounted to or integrated with second linkage 110-2. Alternatively, first curved slot 120-1 can be formed within or defined by second linkage 110-2. In this alternative example, first pin 118-1 passes through and is retained within a first circular opening formed within first linkage 110-1, or first pin 118-1 can be mounted to or integrated with first linkage 110-1.

Second pin-in-slot joint 114-1 includes a second curved slot 124-1 and a second pin 122-1 that is retained within second curved slot 124-1. In this configuration, second pin 122-1 can travel along and rotate within second curved slot 124-1 as the pair of linkages 104 are rotated relative to each other. In the example configuration of the pair of linkages 104 depicted in FIG. 1, second pin 122-1 is located at a first position at a first terminal end 128-1 of second curved slot 124-1 that opposes a second terminal end 128-2 of the second curved slot.

In the example depicted in FIG. 1, second curved slot 124-1 is formed within or otherwise defined by first linkage 110-1. Second curved slot 124-1 is an instance of second curved slot 124 of linkage configuration 110. As a first example, second pin 122-1 passes through and is retained within a second circular opening (e.g., depicted at 123 with reference to linkage configuration 110) formed within or defined by second linkage 110-2. As a second example, second pin 122-1 is mounted to or integrated with second linkage 110-2. Alternatively, second curved slot 124-1 can be formed within or defined by second linkage 110-2. In this alternative example, second pin 122-1 passes through and is retained within a second circular opening formed within first linkage 110-1, or second pin 122-1 can be mounted to or integrated with first linkage 110-1.

First curved slot 120-1 of first pin-in-slot joint 112-1 has a first radius 130. In at least some examples, first radius 130 can be constant across an angular range of displacement defined by first curved slot 120-1 such that the first curved slot forms an arc segment of a first circle 132. Second curved slot 124-1 of second pin-in-slot joint 114-1 has a second radius 134. In at least some examples, second radius 134 can be constant across an angular range of displacement defined by second curved slot 124-1 such that the second curved slot forms an arc segment of a second circle 136. As an example, the angular range of displacement of first curved slot 120-1 between terminal ends 126-1 and 126-2 is equal to the angular range of displacement of second curved slot 124-1 between terminal ends 128-1 and 128-2. This angular range of displacement is also equal to angles 156 and 172. In the example of FIG. 1, first radius 130 of first curved slot 120-1 and second radius 134 of second curved slot 124-1 have a common radius center 142-1 that forms a virtual pivot 144-1 of hinge 103-1. In this example, second circle 136 and first circle 132 are concentric about common radius center 142-1, and second radius 134 of second curved slot 124-1 has a greater length than first radius 130 of first curved slot 120-1.

In the example of FIG. 1, hinge 103-1 forms a virtual joint 148-1 in which first linkage 110-1 and second linkage 110-2 can rotate relative to each other about virtual pivot 144-1. Virtual pivot 144-1 is defined as the intersection of first radius 130 and second radius 134, at common radius center 142-1. Accordingly, common radius center 142-1 and virtual pivot 144-1 are coincident across the range of motion of first linage 110-1 relative to second linkage 110-2. In the example of FIG. 1, common radius center 142-1 and virtual pivot 144-1 are located on or beyond an exterior edge 146 of the pair of linkages 104 within plane of rotation 116. As described in further detail with reference to FIGS. 2 and 3, common radius center 142-1 and virtual pivot 144-1 are located on or within a material layer (e.g., material layer 210) mounted to or supported by exterior edge 146 of the linkage assembly. As common radius center 142-1 and virtual pivot 144-1 are located on or within the material layer, the length of the material layer is maintained across the range of motion of the linkage assembly, thereby reducing or eliminating in-plane strain within the material layer across the range of motion. To achieve a hinge design that does not create in-plane strain within material layer 210 across the range of motion, curved slots 120-1 and 124-1 can be designed to place common radius center 142-1 and virtual pivot 144-1 on the centerline of material layer 210.

As previously described, the pair of linkages 104 can form part of a linkage chain 106 that includes additional linkages that are rotatably coupled with each other via hinges that are similarly configured as hinge 103-1. Each hinge of the linkage chain 106 can form a respective virtual joint, as previously described with reference to virtual joint 148-1 of hinge 103-1. As an example, second linkage 110-2 can be rotatably coupled with another neighboring linkage (not shown in FIG. 1) of the plurality of linkages 102 via another hinge that is formed by a pair of pin-in-slot joints or other suitable pair of joints at an opposing end of the second linkage from first linkage 110-1.

In FIG. 1, for example, second linkage 110-2 includes a first curved slot 120-2 and a second curved slot 124-2 that are formed within or otherwise defined by the second linkage. First curved slot 120-2 and second curved slot 124-2 are additional instances of curved slots 120 and 124 of linkage configuration 110. In this example, first curved slot 120-2 can rotatably couple second linkage 110-2 with another neighboring linkage via a first pin that is retained within first curved slot 120-2, and second curved slot 124-2 can rotatably couple second linkage 110-2 with the neighboring linkage via a second pin that is retained within second curved slot 124-2. Alternatively, first curved slot 120-2 and second curved slot 124-2 can be formed within or otherwise defined by the neighboring linkage. In this alternative example, first and second pins can pass through circular openings formed within or otherwise defined by second linkage 110-2, or such pins can be mounted to or integrated with second linkage 110-2.

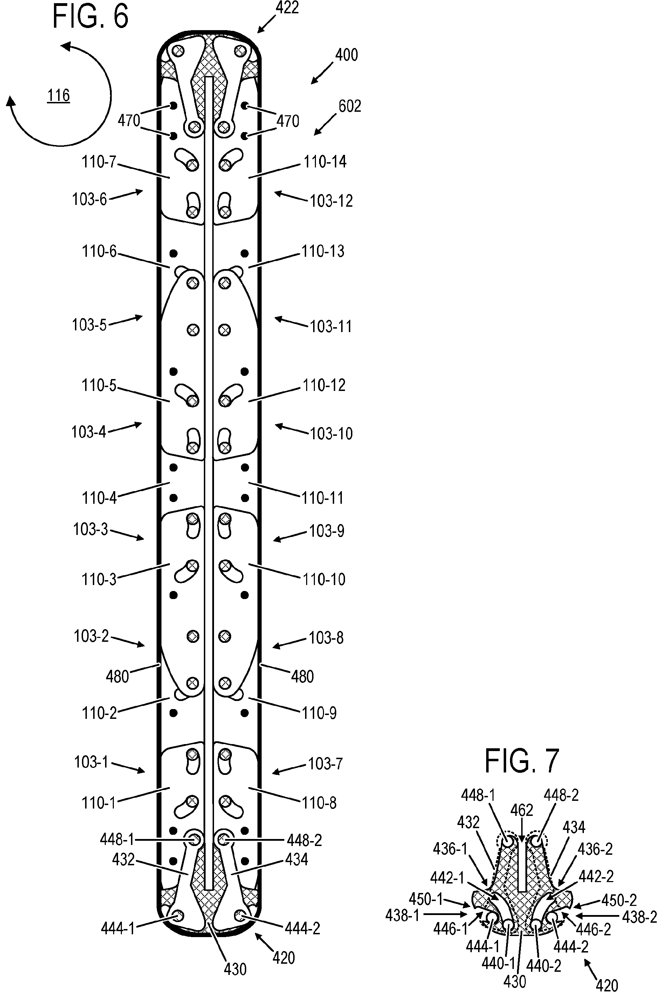

Furthermore, in at least some examples, first linkage 110-1 can be rotatably coupled with another neighboring linkage (not shown in FIG. 1) of the plurality of linkages 102 via another hinge that is formed by a pair of pin-in-slot joints or other suitable pair of joints at an opposing end of the first linkage from second linkage 110-2. In FIG. 1, for example, first linkage 110-1 has a first circular opening 119-1 and a second circular opening 123-1 as instances of circular openings 119 and 123 of linkage configuration 110 to accommodate respective pins. In this example, a first pin can rotatably couple first linkage 110-1 with the neighboring linkage via a first curved slot that is formed within or defined by the neighboring linkage, and a second pin can rotatably couple first linkage 110-1 with the neighboring linkage via a second curved slot (or a second follower surface as described with reference to FIGS. 5 and 6) that is formed within or defined by the neighboring linkage. Alternatively, the curved slots and/or follower surfaces can be formed within or otherwise defined by first linkage 110-1. In this alternative example, the first and second pins can be retained within circular openings formed within the neighboring linkage, or the first and second pins can be mounted to or integrated with the neighboring linkage.

In the example of FIG. 1, exterior edge 146 of the pair of linkages 104 within plane of rotation 116 is formed by exterior edge portions that include at least exterior edge portion 150-1 and exterior edge portion 152-1 of first linkage 110-1. Exterior edge portion 150-1, in this example, forms a linear or planar shape that is colinear with axis 154. Exterior edge portion 152-1, in this example, also forms a linear or planar shape that is angled relative to exterior edge portion 150-1, as indicated by angle 156-1. In FIG. 1, angle 156-1 and exterior edge portions 150-1 and 152-1 are represented with respect to linkage configuration 110 as angle 156 and exterior edge portions 150 and 152.

A portion of exterior edge 146 of second linkage 110-2 within plane of rotation 116 can be similarly shaped as first linkage 110-1. For example, exterior edge 146 is further formed by exterior edge portions of second linkage 110-2, including at least exterior edge portion 150-2 and exterior edge portion 152-2. Within the configuration of FIG. 1, exterior edge portion 152-2 of second linkage 110-2 is colinear with exterior edge portion 150-1 of first linkage 110-1 and with axis 154. Furthermore, in the configuration of the pair of linkages 104 depicted in FIG. 1, exterior edge portion 150-2 is angled relative to each of exterior edge portion 152-2 of second linkage 110-2, exterior edge portion 150-1 of first linkage 110-1, and axis 154 as indicated by angle 158. In this configuration, angle 158 is equal in magnitude to an angle 160 that is formed between an axis 162 that is parallel to axis 154 and passes through first pin 118-1, and is equal to an axis 164 that passes through first pin 118-1 and second pin 122-1. Furthermore, in this configuration, exterior edge portion 152-2 is colinear with exterior edge portion 150-1 along axis 154. Additionally, in this example, circular openings 119-1 and 123-1, and respective pins retained therein reside along axis 162.

In at least some examples, one or more linkages of a linkage assembly can include a different exterior edge shape from the examples depicted in FIG. 1 with respect to first linkage 110-1 and second linkage 110-2. For example, another linkage configuration 110' can include an edge portion 170 (represented by broken lines) having a linear or planar shape that is angled relative to edge portion 150 and axis 154 by an angle 172. Edge portion 170 can provide an additional location or region of the linkage upon which a material layer can be mounted and/or supported. Furthermore, in at least some examples, angle 172 and angle 156 can be equal but orientated in opposing directions to provide a symmetrical configuration about a midplane 174 of linkage configuration 110', shown with dashed lines, that is orthogonal to axis 154. In at least some examples, linkage configuration 110' has a second pair of curved slots 120' and 124' in place of circular openings 119 and 123 that are used to retain respective pins of a neighboring linkage. Examples of linkage configuration 110' are described in further detail with reference to FIG. 4.

In at least some examples, linkage configurations 110 and 110' define openings or cutouts located away from slots 120 and 124, and away from pin openings 119 and 123 that decrease the mass of the linkage while maintaining sufficient structural integrity. The quantity and configuration of such openings and cutouts is application dependent.

FIG. 2 depicts linkage assembly 100 of FIG. 1 in which the pair of linkages 104 of the linkage assembly have a first configuration 200, as previously depicted in FIG. 1. First configuration 200 corresponds to second linkage 110-2 being rotated at angle 158 (in FIG. 1) relative to first linkage 110-1. In this first configuration 200, first pin 118-1of first pin-in-slot joint 112-1 is located at first terminal end 126-1 of first curved slot 120-1, and second pin 122-1 of second pin-in-slot joint 114-1 is located at first terminal end 128-1 of second curved slot 124-1. Locating the pins at the first terminal end of the curved slots in the first configuration 200 enables the linkage assembly to provide and maintain a rigid state in the first configuration when second linkage 110-2 is loaded with a clockwise torque against a fixed first linkage 110-1. Furthermore, in this example, the orientation and spacing of curved slots 120-1 and 124-1 relative to each other, including the location of first terminal ends 126-1 and 128-1 defines the angle (e.g., 158 of FIG. 1) at which second linkage 110-2 is rotated relative to second linkage 110-1 in first configuration 200.

FIG. 2 further depicts linkage assembly 100 including a material layer 210 that is mounted to and supported by first linkage 110-1 and second linkage 110-2. In first configuration 200 of FIG. 2, material layer 210 forms a first shape 214. As an example, the first shape 214 of material layer 210 is a convex shape (curved shape) in first configuration 200 of FIG. 2. Material layer 210 can take the form of and be referred to as a membrane or skin. Material layer 210, in this example, extends along at least a portion of exterior edge 146, including at least exterior edge portions 150-1 and 152-1 of first linkage 110-1, and exterior edge portions 150-2 and 152-2 of second linkage 110-2. Additionally, material layer 210 spans a boundary 212 between first linkage 110-1 and second linkage 110-2.

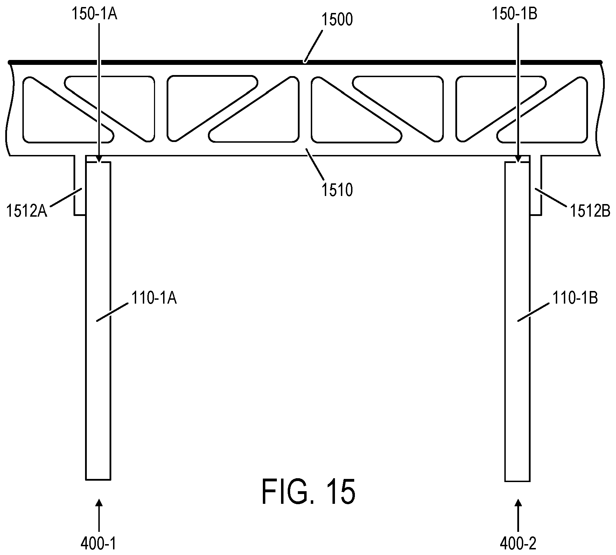

In at least some examples, material layer 210 is mounted directly to first linkage 110-1 and second linkage 110-2 along at least a portion of exterior edge 146, including exterior edge portions 150-1 and 152-1 of first linkage 110-1, and exterior edge portions 150-2 and 152-2 of second linkage 110-2. Additionally or alternatively, as described herein, material layer 210 can be mounted to first linkage 110-1 and second linkage 110-2 via an intermediate structure (e.g., as shown in FIG. 15). In each of these examples, common radius center 142-1 and virtual pivot 144-1 can be located on or within material layer 210 so that the length of the material layer is maintained across the range of motion of the linkage assembly, thereby reducing or eliminating in-plane strain within the material layer.

FIG. 2 schematically depicts a detailed view of material layer 210 at 220 in which common radius center 142-1 and virtual pivot 144-1 are located within the material layer. In this example, common radius center 142-1 and virtual pivot 144-1 are located on centerline 222 of material layer 210. In another example, common radius center 142-1 and virtual pivot 144-1 are located on an exterior surface of material layer 210. In-plane strain within material layer 210 may increase as common radius center 142-1 and virtual pivot 144-1 are moved away from the centerline of the material layer. It will be understood that the configuration of hinge 103-1, including the configuration of slots 120-1 and 124-1 can be designed with respect to the location of material layer 210. If the location of the material layer changes (e.g., is offset by a greater distance from the linkages) then the configuration of slots 120-1 and 124-1 can be changed so that common radius center 142 and virtual pivot 144 are located on or within material layer 210 (e.g., one or near the centerline of the material layer).

As a constant length of material layer 210 is maintained across the range of motion of the linkage assembly, the material layer need not stretch in-plane. Accordingly, material layer 210 can be formed from a material, such as metal (e.g., aluminum, steel, etc.) that exhibits a relatively high modulus of elasticity. Additionally, through use of the disclosed configuration of hinge 103-1, material layer 210 need not undergo deformation in-plane due to rotation of first linkage 110-1 relative to second linkage 110-2.

FIG. 3 depicts linkage assembly 100 of FIG. 1 in which the pair of linkages 104 of linkage assembly 100 have a second configuration 300. Second configuration 300 of FIG. 3 differs from first configuration 200 of FIG. 2 due to rotation and translation of second linkage 110-2 relative to first linkage 110-1. In this second configuration 300 of FIG. 3, exterior edge portion 150-1 of first linkage 110-1 and exterior edge portion 150-2 of second linkage 110-2 are colinear with each other and axis 154, thereby forming a planar (flattened) configuration of exterior edge 146.

In second configuration 300 of FIG. 3, first pin 118-1 of first pin-in-slot joint 112-1 is located at second terminal end 126-2 of first curved slot 120-1, and second pin 122-1 of second pin-in-slot joint 114-1 is located at second terminal end 128-2 of second curved slot 124-1. Locating the pins at the second terminal end of the curved slots in the second configuration 300 enables the linkage assembly to provide and maintain a rigid state in the second configuration when 110-2 is loaded with a counterclockwise torque against fixed 110-1.

FIG. 3 depicts a rotation angle 316 by which first linkage 110-1 and second linkage 110-2 are rotated relative to each other via hinge 103 between first configuration 200 of FIG. 2 and second configuration 300 of FIG. 3. A magnitude of rotation angle 316 is equal to each of angles 158, 160, and the angular displacement defined by curved slots 120 and 124, as previously described with reference to FIG. 1.

As first linkage 110-1 and second linkage 110-2 are rotated relative to each other via hinge 103 between first configuration 200 of FIG. 2 and second configuration 300 of FIG. 3, the first linkage and the second linkage also translate relative to each other by a translation distance 318. As an example, translation distance 318 is equal to a length of the circular arc segments of curved slots 120-1 and 124-1 (as measured between their respective pin locations at the terminal ends of the curved slots). Thus, hinge 103-1 formed by first pin-in-slot joint 112-1 and second pin-in-slot joint 114-1 enables rotation and translation of first linkage 110-1 and second linkage 110-2 relative to each other. Furthermore, in second configuration 300, first pin 118-1 and second pin 122-1 are aligned with and reside along axis 162 that is parallel to axis 154, thereby configuring exterior edge 146 of the pair of linkages 104 along the same plane such that exterior edge components 150-1 and 150-2 are colinear. As first pin-in-slot joint 112-1 and second pin-in-slot joint 114-1 of hinge 103-1 constrain movement in the form of rotation and translation of first linkage 110-1 and second linkage 110-2 relative to each other, hinge 103-1 can be characterized as providing a single degree of freedom with respect to first linkage 110-1 and second linkage 110-2.

Furthermore, in second configuration 300, first pin 118-1 and second pin 122-1 are aligned with and reside along axis 162 that is parallel to axis 154, thereby configuring exterior edge 146 of the pair of linkages 104 along a s. In second configuration 300, a location of pins of another neighboring linkage that may be retained within each of curved slots 120-2 and 124-2 of second linkage 110-2 at second terminal ends 326-2 and 328-2, respectively, are also aligned with and reside along axis 162, thereby enabling an exterior edge portion of the neighboring linkage to be colinear with axis 154, as described with reference to FIG. 6.

Material layer 210 forms a second shape 314 in second configuration 300 that differs from first shape 214 of FIG. 2. As an example, the second shape 314 of material layer 210 is a planar shape (flat shape) in second configuration 300. While the first shape 214 and the second shape 314 of material layer 210 differ from each other (e.g., have different curvature), a length of material layer 210 remains constant throughout a range of motion between first configuration 200 and second configuration 300. Accordingly, material layer 210 experiences reduced or zero in-plane strain due to reconfiguration of linkage assembly 100 between first configuration 200 and second configuration 300.

In other examples, second configuration 300 may instead provide an angle between exterior edge portion 150-1 of first linkage 110-1 and exterior edge portion 150-2 of second linkage 110-2 that differs from the angle (e.g., 158) in first configuration 200. For example, curved slots 120-1 and 124-1 can be extended, shortened, or otherwise reconfigured to provide any suitable angle between first linkage 110-1 and second linkage 110-2 in first and second configurations.

In FIG. 3 section 212 is the portion of material layer 210 that is not in direct contact with exterior edges 150-1 and 150-2 of linkages 110-1 and 110-2 respectively that flexes when joint 103-1 actuates between configurations 200 and 300. Section 212 is always unsupported by the linkages so that the pivot can actuate. In most embodiments of this mechanism, unsupported section 212 is a critical weak point in the outer material layer that drives many of the other design considerations. The only suitable region for attaching layer material layer 210 to the various instances of linkages 110 is at instances of edge portion 150. Edge 150 is the only portion of 110 across which the material layer 210 remains stationary relative to linkage 110 during actuation between the two configurations of the linkage assembly.

FIG. 4 depicts another example linkage assembly 400 that includes the pair of linkages 104 of FIG. 1 as a sub-assembly of linkage assembly 400. In this example, the pair of linkages 104, including first linkage 110-1 and second linkage 110-2 are rotated relative to each other about hinge 103-1 to provide first configuration 200 of FIG. 2. As previously described with reference to FIG. 2, hinge 103-1 of the pair of linkages 104 is formed by first pin-in-slot joint 112-1 and second pin-in-slot joint 114-1 that work together to allow the linkages to pivot about common radius center 142-1 and virtual pivot 144-1 located on or within the material layer.

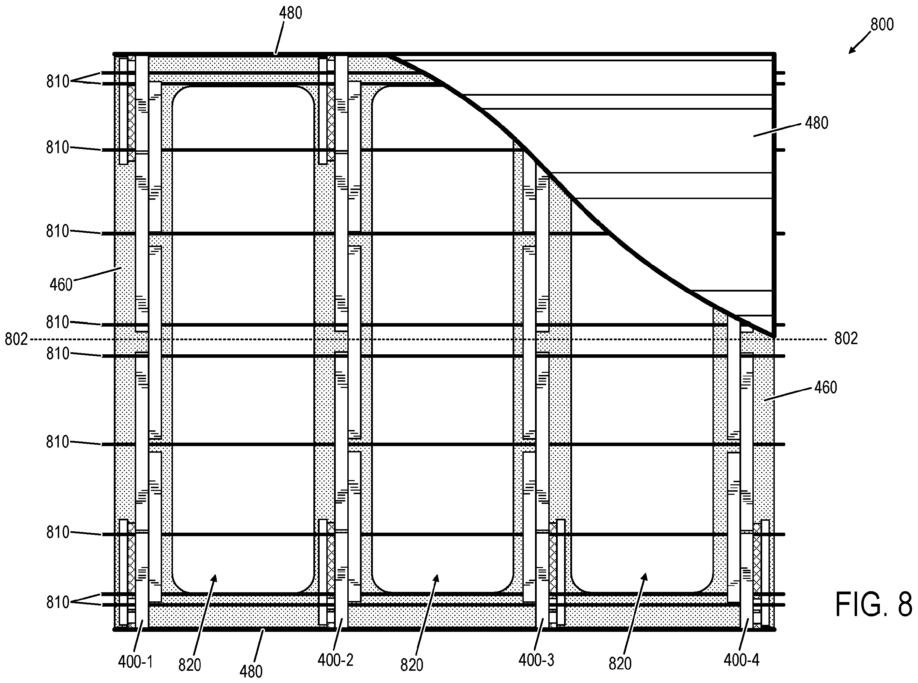

Linkage assembly 400 includes additional repeated instances of linkage configurations 110 and 110' of FIG. 1 that are rotatably coupled to each other via hinges that have the same configuration as hinge 103-1. Each instance of hinge 103-1 within linkage assembly 400 can also have a common radius center and virtual pivot that are located on or within the material layer (e.g., on a centerline of the material layer). In the example of FIG. 4, the various linkages of linkage assembly 400 collectively form an annular shape 402 that encloses an interior region 410. As an example, linkage assembly 400 can take the form of a structural rib of a reconfigurable structure, such as a fluid vessel (e.g., water tank, fuel tank, etc.), a conduit, or a wheel, additional examples of which are described with reference to FIGS. 8, 9, 10, 11, and 12.

Linkage assembly 400 further includes a third linkage 110-3 that is rotatably coupled to second linkage 110-2 via a hinge 103-2, a fourth linkage 110-4 that is rotatably coupled to third linkage 110-3 via a hinge 103-3, a fifth linkage 110-5 that is rotatably coupled to fourth linkage 110-4 via a hinge 103-4, a sixth linkage 110-6 that is rotatably coupled to fifth linkage 110-5 via a hinge 103-5, and a seventh linkage 110-7 that is rotatably coupled to sixth linkage 110-6 via a hinge 103-6. Each of hinges 103-2, 103-3, 103-4, 103-5, and 103-6 are formed by a respective a first pin-in-slot joint and second pin-in-slot joint, as previously described with reference to hinge 103-1. Accordingly, each of hinges 103-2, 103-3, 103-4, 103-5, and 103-6 form a respective virtual joint, as previously described with reference to virtual joint 148-1 of FIG. 1.

Linkages 110-1, 110-2, 110-3, 110-4, 110-5, 110-6, and 110-7 of linkage assembly 400 form a first linkage chain 412. Each pair of neighboring linkages of first linkage chain 412 are rotated relative to each other via a respective hinge that forms a virtual joint to provide the first configuration 200 of FIG. 2, thereby enclosing a portion of interior region 410. In this example, linkages 110-1, 110-2, and 110-3 are each an instance of linkage configuration 110 of FIG. 1 having a first orientation within first linkage chain 412; linkages 110-5, 110-6, and 110-7 are each an instance of linkage configuration 110 having a second orientation within first linkage chain 412 that opposes the first orientation; and linkage 110-4 is an instance of linkage configuration 110' of FIG. 1 that is located between linkage 110-3 and linkage 110-5. Features of linkage 110-4 that are hidden from view in FIG. 1 are depicted using broken lines.

Furthermore, in this example, linkage assembly 400 further includes a second linkage chain 414 that is similarly configured as first linkage chain 412, but as a mirror image of first linkage chain 412 about a central plane 416 that bisects linkage assembly 400. For example, linkage assembly 400 includes an eighth linkage 110-8 and a ninth linkage 110-9 that are rotatably coupled to each other via a hinge 103-7, a tenth linkage 110-10 that is rotatably coupled to ninth linkage 110-9 via a hinge 103-8, an eleventh linkage 110-11 that is rotatably coupled to tenth linkage 110-10 via a hinge 103-9, a twelfth linkage 110-12 that is rotatably coupled to eleventh linkage 110-11 via a hinge 103-10, a thirteenth linkage 110-12 that is rotatably coupled to twelfth linkage 110-12 via a hinge 103-11, and a fourteenth linkage 110-14 that is rotatably coupled to thirteenth linkage 110-13 via a hinge 103-12. Each of hinges 103-7, 103-8, 103-9, 103-10, 103-11, and 103-12 are formed by a respective a first pin-in-slot joint and second pin-in-slot joint, as previously described with reference to hinge 103-1. Accordingly, each of hinges 103-7, 103-8, 103-9, 103-10, 103-11, and 103-12 form a respective virtual joint, as previously described with reference to virtual joint 148-1 of FIG. 1.

As described above, linkages 110-8, 110-9, 110-10, 110-11, 110-12, 110-13, and 110-14 of linkage assembly 400 form second linkage chain 414. Each pair of neighboring linkages of second linkage chain 414 are rotated relative to each other via a respective hinge that forms a virtual joint to provide the first configuration 200 of FIG. 2, thereby enclosing a portion of interior region 410. In this example, linkages 110-8, 110-9, and 110-10 are each an instance of linkage configuration 110 of FIG. 1 having a first orientation within second linkage chain 414; linkages 110-12, 110-13, and 110-14 are each an instance of linkage configuration 110 having a second orientation within second linkage chain 414 that opposes the first orientation; and linkage 110-11 is an instance of linkage configuration 110' of FIG. 1 that is located between linkage 110-10 and linkage 110-12. Features of linkage 110-11 that are hidden from view in FIG. 1 are depicted using broken lines.

Linkage assembly 400 further includes a first base linkage sub-assembly 420 and a second base linkage sub-assembly 422 that rotatably couple first linkage chain 412 to second linkage chain 414. In this example, first base linkage sub-assembly 420 is rotatably coupled to first linkage 110-1 of first linkage chain 412 via a first hinge 424-1 and to eighth linkage 110-8 of second linkage chain 414 via a second hinge 424-2. Second base linkage sub-assembly 422 is rotatably coupled to seventh linkage 110-7 of first linkage chain 412 via a first hinge 426-1 and to fourteenth linkage 110-14 of second linkage chain 414 via a second hinge 426-2. As described in further detail with reference to FIG. 5, hinges 424-1, 424-2, 426-1, and 426-2 can be formed by two pin-in-slot joints or by a pin-in-slot joint and a pin-follower joint. Hinges 424-1, 424-2, 426-1, and 426-2 can take the form of virtual joints, as an example.

First base linkage sub-assembly 420 includes a base linkage 430, a first rocker linkage 432, and a second rocker linkage 434. First base linkage sub-assembly 420 is shown in FIG. 5 with first rocker linkage 432 and second rocker linkage 434 represented by broken lines to reveal underlying structure of base linkage 430.

Referring to FIGS. 4 and 5, first linkage 110-1 of first linkage chain 412 is rotatably coupled to base linkage 430 via first hinge 424-1 that includes a first pin-in-slot joint 436-1 and a first pin-follower joint 438-1 that are spaced apart from each other and have different orientations relative to each other within plane of rotation 116. First pin-in-slot joint 436-1 includes a pin 440-1 and a curved slot 442-1. Pin 440-1 is retained within and can travel along curved slot 442-1 as first linkage 110-1 is rotated relative to base linkage 430. Pin-follower joint 438-1 includes a pin 444-1 and a follower surface 446-1. Pin 444-1 is retained in contact with and can travel along follower surface 446-1 as first linkage 110-1 is rotated relative to base linkage 430. In this example, pin 444-1 is retained in contact with follower surface 446-1 by first rocker linkage 432, as described below. While first pin-follower joint 438-1 is utilized in this example, it will be understood that first pin-follower joint 438-1 can instead take the form of a pin-in-slot joint. In this alternative example, follower surface 446-1 can instead take the form of a curved slot formed within or otherwise defined by base linkage 430. In at least some examples, a follower surface can be used in place of an enclosed curved slot to comply with spatial constraints defining an envelope of the linkage assembly.

In this example, pins 440-1 and 444-1 are retained within circular openings formed within first linkage 110-1 or pins 440-1 and 444-1 are mounted to or integrated with first linkage 110-1, and curved slot 442-1 and follower surface 446-1 are formed within or defined by base linkage 430. In another example, pins 440-1 and 444-1 are retained within circular openings formed or defined within base linkage 430 or such pins are mounted to or integrated with base linkage 430, and curved slot 442-1 and follower surface 446-1 are formed within or otherwise defined by first linkage 110-1.

A first end of first rocker linkage 432 is rotatably coupled to base linkage 430 via a rotational joint 448-1, and a second end of rocker linkage 432 is coupled to first linkage 110-1 via pin 444-1. First rocker linkage 432 retains pin 444-1 in contact with follower surface 446-1 due to the first rocker linkage being coupled to base linkage 430 on a first end via rotational joint 448-1 and on a second end to pin 444-1. Furthermore, in this example, follower surface 446-1 includes a detent structure 450-1 that inhibits movement of pin 444-1 beyond a terminal end of the follower surface.

Eighth linkage 110-8 of second linkage chain 414 is rotatably coupled to base linkage 430 via second hinge 424-2 that includes a second pin-in-slot joint 436-2 and a second pin-follower joint 438-2 that are spaced apart from each other and have different orientations relative to each other within plane of rotation 116. Second pin-in-slot joint 436-2 includes a pin 440-2 and a curved slot 442-2. Pin 440-2 is retained within and can travel along curved slot 442-2 as eighth linkage 110-8 is rotated relative to base linkage 430. Pin-follower joint 438-2 includes a pin 444-2 and a follower surface 446-2. Pin 444-2 is retained in contact with and can travel along follower surface 446-2 as eighth linkage 110-8 is rotated relative to base linkage 430. In this example, pin 444-2 is retained in contact with follower surface 446-2 by second rocker linkage 434, as described below. While second pin-follower joint 438-2 is utilized in this example, it will be understood that second pin-follower joint 438-2 can instead take the form of a pin-in-slot joint.

In this example, pins 440-2 and 444-2 are retained within circular openings formed within eighth linkage 110-8 or such pins are mounted to or integrated with eighth linkage 110-8, and curved slot 442-2 and follower surface 446-2 are formed within or defined by base linkage 430. In another example, pins 440-2 and 444-2 are retained within circular openings of base linkage 430 or such pins are mounted to or integrated with base linkage 430, and curved slot 442-2 and follower surface 446-2 are formed within or otherwise defined by eighth linkage 110-8.

A first end of second rocker linkage 434 is rotatably coupled to base linkage 430 via a rotational joint 448-2, and a second end of rocker linkage 434 is coupled to eighth linkage 110-8 via pin 444-2. Second rocker linkage 434 retains pin 444-2 in contact with follower surface 446-2 due to the second rocker linkage being coupled to base linkage 430 on a first end via rotational joint 448-2 and on a second end to pin 444-2. Furthermore, in this example, follower surface 446-2 includes a detent structure 450-2 that inhibits movement of pin 444-2 beyond a terminal end of the follower surface.

Second base linkage sub-assembly 422, in this example, has the same configuration as first base linkage sub-assembly 420, but is orientated in an opposite direction from first base linkage sub-assembly 420. For example, second base linkage sub-assembly 422 is rotatably coupled to seventh linkage 110-7 of first linkage chain 412 via second hinge 426-1, and is rotatably coupled to fourteenth linkage 110-14 of second linkage chain 414 via hinge 426-2. First base linkage sub-assembly 420 and second base linkage sub-assembly 420 in combination with first linkage chain 412 and second linkage chain 414 form annular shape 402 that encloses interior region 410.

In at least some examples, linkage assembly 400 is retained in the configuration of FIG. 4 by a spine 460 that spans interior region 410 from first base linkage sub-assembly 420 to second base linkage sub-assembly 422. As an example, spine 460 can be coupled to first base linkage sub-assembly 420 and to second base linkage sub-assembly 422 as part of an assembly process to inhibit annular shape 402 of linkage assembly 400 from collapsing to a configuration shown in FIG. 6. Referring again to FIG. 5, base linkage 430 of first base linkage sub-assembly 420 and second base linkage sub-assembly 422 can each define a channel 462 that accommodates spine 460.

In at least some examples, linkages of linkage chains 412 and 414 can define one or more openings that accommodate longitudinal supports, such as stringers. Examples of such openings for longitudinal supports are depicted in FIG. 4 by reference numeral 470. These longitudinal supports or stringers can be used to secure multiple instances of linkage assembly 400 in a particular configuration, such as described with reference to FIG. 8.

FIG. 4 further depicts a material layer 480 mounted to and supported by linkage assembly 400. As previously described with reference to FIGS. 1-3, the hinges that form virtual joints of linkage assembly 400 enable the linkages of the linkage assembly to be rotated relative to each other between a first configuration shown in FIG. 4 and a second configuration shown in FIG. 6 while maintaining a constant length of the material layer across the range of motion. By maintaining a constant length, in-plane strain within the material layer 480 can be reduced or eliminated across the range of motion of the linkages.

FIG. 6 depicts linkage assembly 400 in the second configuration in which the annular shape 402 of FIG. 4 has been collapsed to a flattened shape 602. The flattened shape 602 of linkage assembly 400 occupies significantly less volume than the annular shape 402 of FIG. 4, enabling the linkage assembly to be flat-packed for storage and transport. To collapse linkage assembly 400 from the annual shape 420 to the flattened shape 602 shown in FIG. 6, an upper or lower edge of spine 460 can be unfastened from the linkages, material layer, and/or other components to enable the spine to remain within an interior region of the linkage assembly while configured as the flattened shape. Alternatively, the spine can be entirely separated from the linkage assembly as part of a disassembly process, in an example.

FIG. 7 depicts an example of base linkage sub-assembly 420 of FIG. 6 with first rocker linkage 432 and second rocker linkage 434 represented by broken lines to reveal underlying structure of base linkage 430. In the example of FIG. 7, pin 440-1 is located at an opposing terminal end of curved slot 442-1, and pin 440-2 is located at an opposing terminal end of curved slot 442-2 from the positions depicted in FIG. 5. Additionally, in FIG. 7, pin 444-1 is located at an opposing terminal end of follower surface 446-1, and pin 444-2 is located at an opposing terminal end of follower surface 446-2 from the positions depicted in FIG. 5. As previously described, base linkage sub-assembly 422 can be similarly configured as base linkage sub-assembly 420.

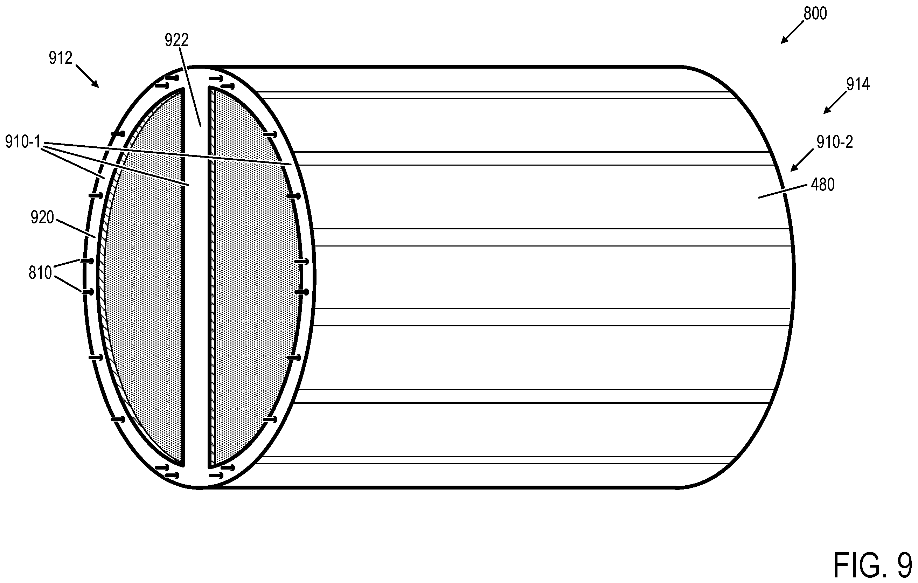

FIG. 8 depicts an example reconfigurable structure 800 that includes multiple instances of linkage assembly 400 of FIG. 4 that are identified by reference numerals 400-1, 400-2, 400-3, and 400-4. Reconfigurable structure 800 has a first configuration corresponding to an annual tube shape in FIG. 8. In this example, reconfigurable structure 800 takes the form of a fluid vessel, aspects of which are described in further detail with reference to FIGS. 9 - 11.

In FIG. 8, linkage assemblies 400-1, 400-2, 400-3, and 400-4 are depicted within a plane that is orthogonal to plane of rotation 116 of FIG. 4. In this example, linkage assemblies 400-1, 400-2, 400-3, and 400-4 are spaced apart from each other along a longitudinal axis 802. Linkage assemblies 400-1, 400-2, 400-3, and 400-4 take the form of structural ribs that collectively support material layer 480 that spans the linkage assemblies along longitudinal axis 802. While reconfigurable structure 800 includes four instances of linkage assembly 400 orientated parallel to each other, it will be understood that a reconfigurable structure can include any suitable quantity of linkage assemblies.

For a particular application, a continuous structural wall could be formed by stacking many instances of linkage assembly 400 side-by-side without changing or affecting kinematic properties of the linkage assemblies. These linkage stacks do not have to contain the same number of linkages and they increase in strength in direct proportion to the number of links in that stack. The ability to stack linkages enables the designer of the reconfigurable structure to tailor the strength of each stack to the loads and stresses in that part of the structure without adding unnecessary mass and cost. For example, a structure for containing a fluid may exhibit greatest stress at the bottom of the structure due to gravity, in such case it can be advantageous to place the largest stacks at the bottom of the structure.

Linkage assemblies 400-1, 400-2, 400-3, and 400-4 are retained in alignment with each other along longitudinal axis 802 by longitudinal supports or stringers 810 that pass through openings 470 in the linkage assemblies. Additionally, each of linkage assemblies 400-1, 400-2, 400-3, and 400-4 are retained in the annular shape 402 of FIG. 4 by rigid connections at the top and bottom with a common spine 460 that spans across each and all of the linkage assemblies. In this example, spine 460 includes openings 820 that serve as mass-saving cut outs in addition to enabling fluid contained within an interior region bounded by material layer 480 to migrate between opposing sides of the spine. Note that the rectangular geometry of each opening 820 is depicted for purposes of discussion and ease of illustration, and that these openings can have other suitable shapes (e.g., trusses) that distribute stress.

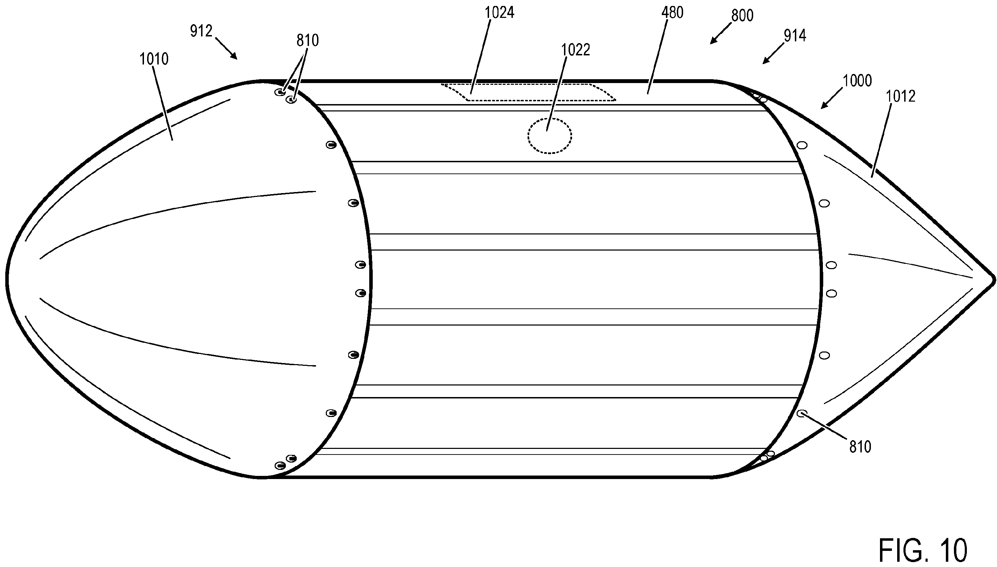

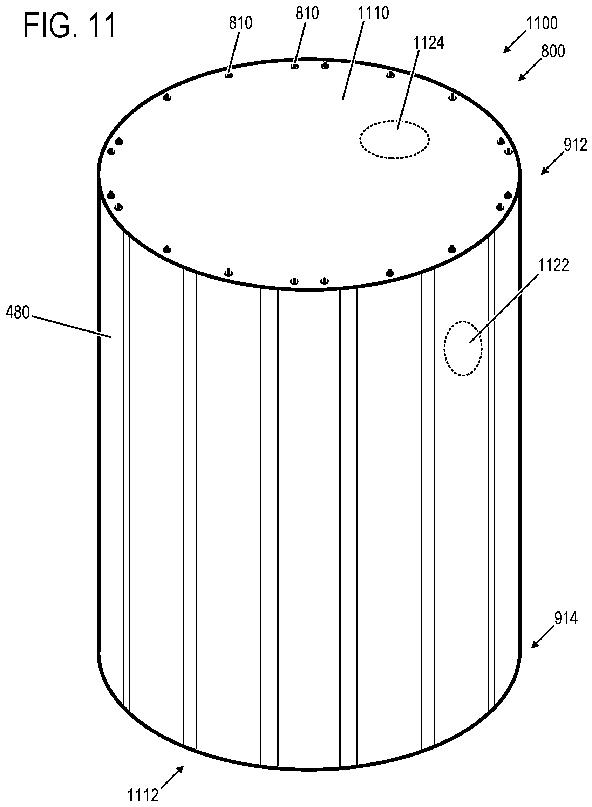

FIG. 9 depicts reconfigurable structure 800 including a first end support plate 910-1 installed on a first terminal end 912 of an annular tube formed by material layer 480. In this example, first end support plate 910-1 includes an annular ring portion 920 and a spanning portion 922 that spans the annular ring portion. First end support plate 910-1 can be mounted to one or more of spine 460, linkage assembly 400-1, and/or longitudinal supports or stringers 810. In this example, longitudinal supports or stringers 810 pass through corresponding openings formed within annular ring portion 920 of first end support plate 910-1. Reconfigurable structure 800 includes a second end support plate 910-2 that is identical to or similarly configured as first end support plate 910-1 installed on a second terminal end 914 of the annular tube shape formed by material layer 480. This configuration allows for tensile load to be transferred between opposing support plates 910-1 and 910-2 via the stringers 810 to avoid applying stress to the linkage assemblies (e.g., 400-1, 400-2, 400-3, and 400-4). Furthermore, end support plates 910-1 and 910-2 can provide additional support for the linkage assemblies to maintain the annular shape 402 depicted in FIG. 4, can serve as a double check for assembly technicians to ensure that the structure is assembled and deployed correctly, and can provide a rigid structure upon which end caps can be mounted, as described with reference to FIGS. 10 and 11. End support plates 910-1 and 910-2 support the interior of material layer 480 at and along the distal ends of the tube so that the material layer can be loaded on its exterior by end caps. This allows for the material layer 480 to be pitched in the radial direction between the end support plates on an interior side and the end caps on the exterior side so that a fluid tight barrier can be achieved on this seem. This feature enables potential applications as a deployable closed volume where there is a large pressure difference between the interior and the exterior of the volume such as for transporting pressurized gases or creating a large deployable water storage tank for disaster relief.

FIG. 10 depicts reconfigurable structure 800 including an end cap 1010 installed on first terminal end 912, and an end cap 1012 installed on second terminal end 914 of the annular tube formed by material layer 480. In this example, end caps 1010 and 1012 take the form of aerodynamic nose and tail cones, respectively. For example, reconfigurable structure 800 can take the form of a fluid vessel 1000, such as a drop tank that can be carried upon an aircraft or other aeronautical vehicle.

In this example, longitudinal supports or stringers 810 pass through openings formed within end caps 1010 and 1012. Terminal ends of the longitudinal supports or stringers 810 can include threads that accommodate a threaded nut or other fastener to enable end caps 1010 and 1012 to be tightened against first end support plate 910-1 and second end support plate 910-2, respectively. Seals can be included at an interface between the end caps (1010, 1012) and end support plates (910-1, 910-2), between the end caps and material layer 480, and between the end support plates and the material layer. Aerodynamic plugs can be added over recessed bolt heads in end caps to maintain a smooth exterior.

In at least some examples, fluid vessel 1000 can include an opening and cap represented schematically at 1022 that enables a fluid to be provided to or retrieved from an interior of the fluid vessel. Furthermore, in at least some examples, fluid vessel 1000 can include a mounting structure 1024 represented schematically in FIG. 10 that enables the fluid vessel to be mounted to another structure, such as an aircraft or other aeronautical vehicle, as an example. Providing an opening in location 1024 for a mounting structure can be advantageous because it enables for a direct interface with central spine 460.

FIG. 11 depicts another example of reconfigurable structure 800 including an end cap 1110 installed on first terminal end 912, and an end cap 1112 installed on second terminal end 914 of the annular tube shape formed by material layer 480. In this example, end caps 1010 and 1012 have a flat or planar configuration in contrast to the aerodynamic nose and tail cones of FIG. 10. As an example, reconfigurable structure 800 can take the form of a fluid storage container or barrel 1100.

In this example, longitudinal supports or stringers 810 pass through openings formed within end caps 1110 and 1112. Terminal ends of the longitudinal supports or stringers 810 can include threads that accommodate a threaded nut or other fastener to enable end caps 1110 and 1112 to be tightened against first end support plate 910-1 and second end support plate 910-2, respectively. Seals can be included at an interface between the end caps (1110, 1112) and end support plates (910-1, 910-2), between the end caps and material layer 480, and between the end support plates and the material layer. In at least some examples, fluid vessel 1100 can include an opening and cap represented schematically at 1122 within material layer 480 or at 1124 within end cap 1110 that enables a fluid to be provided to or retrieved from an interior of the fluid vessel.

FIG. 12 depicts reconfigurable structure 800 of FIG. 8 in a second configuration in which the reconfigurable structure has been collapsed to a flattened shape, as previously described with reference to FIG. 6. The flattened shape of reconfigurable structure 800 occupies less volume than the annular tube shape of FIGS. 8 - 11, enabling the reconfigurable structure to be flat-packed for storage and transport, as an example.

In the example of FIG. 12, spine 460 of FIG. 8, end support plates 910-1 and 910-2 of FIG. 9, and end caps 1010 and 1012 of FIG. 10 or 111 and 1112 of FIG. 11 have been removed to enable reconfigurable structure 800 to be collapsed to the flattened shape. Spine 460, end support plates 910-1 and 910-2, and end caps 1110 and 1112, each having a flat or planar configuration can be flat packed with reconfigurable structure 800 for storage and transport.

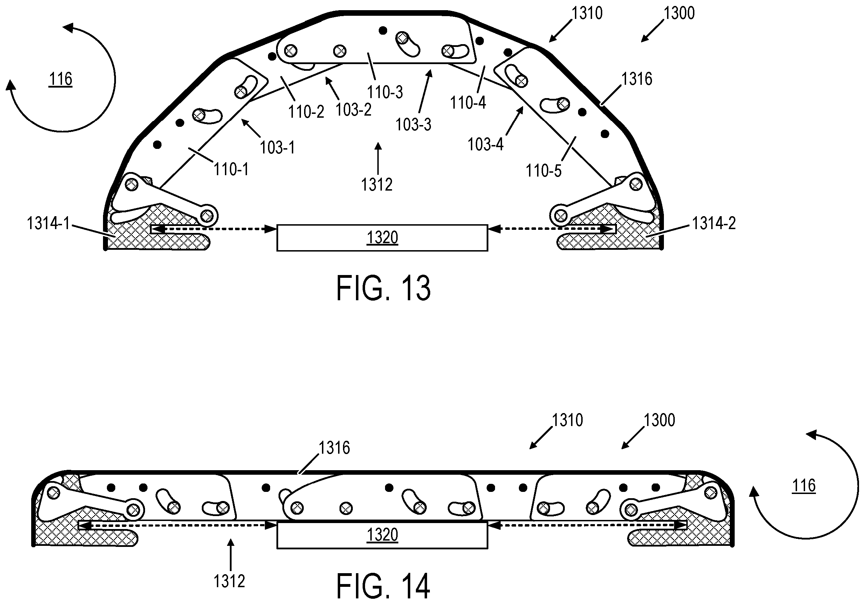

FIG. 13 depicts another example of a reconfigurable structure 1300 that can take the form of at least a portion of an airfoil, a hydrofoil, or a control surface, as examples. Reconfigurable structure 1300 includes one or more instances of linkage assembly 1310 that are spaced apart from each other along a longitudinal axis that is orthogonal to plane of rotation 116.

In this example, linkage assembly 1310 includes a linkage chain 1312 formed by linkages 110-1, 110-2, 110-3, 110-4, and 110-5 having the same configuration as previously described with reference to FIG. 4. For example, the linkages of linkage chain 1312 of linkage assembly 1310 are rotatably coupled to each other via hinges 103-1, 103-2, 103-3, and 103-4 in which each hinge is formed by a pair of pin-in-slot joints. In the example of FIG. 13, linkage assembly 1310 has a first configuration corresponding to a convex shape (curved shape) in which each linkage of linkage chain 1312 is rotated at an angle relative to its neighboring linkage(s), as previously described with reference to FIG. 2. While linkage chain 1312 includes five linkages in this example, it will be understood that linkage chain 1312 can include any suitable quantity of linkages.

Linkage assembly 1310 further includes a first base linkage sub-assembly 1314-1 and a second base linkage sub-assembly 1314-2 located at opposing terminal ends of linkage chain 1312. In this example, linkage 110-1 is rotatably coupled to first base linkage sub-assembly 1314-1, and linkage 110-5 is rotatably coupled to second base linkage sub-assembly 1314-2. First base linkage sub-assembly 1314-1 and second base linkage sub-assembly 1314-2 have a configuration that is similar to previously described base linkage sub-assemblies 420 and 422 of FIGS. 4 - 7 with respect to first linkage chain 412.

Reconfigurable structure 1300 further includes a material layer 1316 that is mounted to and supported by the linkages of linkage assembly 1310, as previously described with reference to FIGS. 1 - 4.

Reconfigurable structure 1300 can further include one or more actuators 1320, represented schematically in FIG. 13. The one or more actuators 1320 are operable to move reconfigurable structure 1300 between the first configuration of FIG. 13 and a second configuration of FIG. 14 corresponding to a flattened shape of the reconfigurable structure.

FIG. 14 depicts reconfigurable structure 1300 of FIG. 13 having a second configuration corresponding to a flattened shape due to rotation of the linkages of linkage assembly 1310 relative to each other within plane of rotation 116. Within the context of reconfigurable structure 1300 taking the form of at least a portion of an airfoil, a hydrofoil, or a control surface, the reconfigurable structure having the second configuration of FIG. 14 provides different aerodynamic or hydrodynamic performance characteristics as compared to the first configuration of FIG. 13.

As previously described with reference to the preceding examples, the material layers described herein can be mounted to and supported by linkages of one or more linkage assemblies of a reconfigurable structure. FIG. 15 depicts an example in which a material layer 1500 is mounted to and supported by example linkage 110-1A of linkage assembly 400-1 and linkage 110-1B of linkage assembly 400-2 via an intermediate structure that takes the form of a truss 1510. In this example, linkage 110-1A and linkage 110-1B represent instances of previously described first linkage 110-1 of FIGS. 1-4 and 6, and linkage assemblies 400-1 and 400-2 represent instances of previously described linkage assembly 400 of FIG. 4 that are spaced apart from each other, such as previously described with reference to FIG. 8.

In this example, truss 1510 spans linkage assemblies 400-1 and 400-2 to provide additional support to material layer 1500 between linkages 110-1A and 110-1B. Truss 1510 can further span other linkage assemblies or all linkage assemblies of the reconfigurable structure to provide additional support to material layer 1500 between other instances of linkage 110-1. Furthermore, in this example, truss 1510 is coupled to linkages 110-1A and 110-1B via brackets 1512A and 1512B. Within FIG. 15, instances of exterior edge portion 150-1 of linkage 110-1 as previously described with reference to FIGS. 1-3 are represented in FIG. 15 as exterior edge portion 150-1A of linkage 110-1A and exterior edge portion 150-1B of linkage 110-1B. In this example, truss 1510 spans linkage 110-1A and 110-1B between material layer 1500 and exterior edge portions 150-1A and 150-1B.

In at least some examples, each linkage of each linkage assembly of a reconfigurable structure can support one or more truss structures similar to truss 1510 to which the material layer is mounted and supported. For example, linkage assembly 400 of FIG. 4 can include trusses that mate with each of the linkages of each linkage assembly to form a network of light-weight reinforcements of the material layer that are orientated orthogonally to plane of rotation 116.

The various linkages described herein can be manufactured using any suitable set of techniques. As an example, the linkages can be formed by stamping, punching, cutting, and/or milling the linkages from a sheet material (e.g., metal sheeting) according to the various linkage configurations disclosed herein. In this example, the linkages can have a thickness as measured along an axis orthogonal to the plane of rotation (e.g., as depicted in FIG. 8) that is relatively thin as compared to a broad face of the linkages (e.g., as depicted in FIGS. 1-7). However, it will be understood that other suitable techniques can be used to manufacture the various linkages disclosed herein, including molding and/or additive manufacturing, as examples. The various components of the reconfigurable structures disclosed herein can be designed to approximate two-dimensional geometries and do not require tight tolerancing, which lends itself to being manufactured with budget sheet cutting techniques like laser cutting, water jet, or stamping, as examples.

The various material layers described herein can be mounted directly to linkages of a linkage assembly via mechanical fasteners, welds, and/or adhesives, as examples. As additional examples, the various material layers described herein can be mounted indirectly to linkages of a linkage assembly via an intermediate structure via mechanical fasteners, welds, and/or adhesives. As an example, the intermediate structure can include one or more instances of truss 1510 and brackets 1512A, 1512B, as described with reference to FIG. 15. In at least some examples, welding locations may be difficult to access, and fasteners may be too bulky. Components of the reconfigurable structures disclosed herein may be interlocking so that they do not require additional joining after initial assembly, and can provide a low-mass solution.

In the preceding examples of FIGS. 1 - 15, linkage assemblies 100 of FIGS. 1-3, 400 of FIGS. 4-12, and 15, and 1300 of FIGS. 13-14 each include two or more linkages in which neighboring pairs of linkages are rotatably coupled to each other via a hinge (e.g., 103-1) formed by a first pin-in-slot joint and a second pin-in-slot joint. The hinge in these preceding examples takes the form of a virtual joint having a virtual pivot located on the material layer, enabling the material layer to maintain a constant length across a range of motion of the linkages. Each linkage of the preceding examples can be replaced by or form part of a set of co-mounted linkages that are mounted in parallel with each other via a hinge formed by a first set of pin-in-slot joints and a second set of pin-in-slot joints. This parallel configuration of two or more co-mounted linkages can increase strength and/or stability of the linkage assembly in at least some implementations, while also enabling a material layer mounted thereto to maintain a constant length across a range of motion of the linkage assembly.

FIG. 16 depicts a portion of an example linkage assembly 1600 that forms a linkage chain 1606 in which each set of co-mounted linkages represents an individual linkage of previously described linkage assembly 400 of FIG. 4. As described in further detail, linkage assembly 1600 can provide the same annular shape 402 and flattened shape 602 as previously described with reference to FIG. 4 and FIG. 6, respectively, when viewed within plane of rotation 116. Within FIG. 16, linkage assembly 1600 is viewed along an axis that is orthogonal to plane of rotation 116 (shown in FIG. 1), thereby providing an edge view of the linkage assembly and its various linkages. A material layer (not shown in FIG. 16) can be mounted to linkage assembly 1600 along a face of the linkage assembly shown by the edge view in FIG. 16, such as previously described with reference to material layers 210, 480, 1316, and 1500 as examples.

Linkage assembly 1600 includes a first set of co-mounted linkages 1610-1 rotatably coupled to a second set of co-mounted linkages 1610-2 via a hinge 1603-1 formed by a first set of pin-in-slot joints 1670-1 and a second set of pin-in-slot joints 1672-1. Hinge 1603-1 is an example of previously described hinge 103-1 of FIGS. 1-4 that can be used to rotatably couple two sets of co-mounted linkages to each other.

The first set of co-mounted linkages 1610-1 includes two or more co-mounted linkages mounted in parallel with each other via a first pin 118-1.1 of the first set of pin-in-slot joints 1670-1 and a second pin 122-1.1 of the second set of pin-in-slot joints 1672-1. In the example of FIG. 16, the first set of co-mounted linkages 1610-1 includes four co-mounted linkages 110-1.1, 110-1.2, 110-1.3, and 110-1.4. It will be understood that the first set of co-mounted linkages 1610-1 can include other suitable quantity of co-mounted linkages (e.g., 2, 3, 5 or more co-mounted linkages).

Each co-mounted linkage of the first set of co-mounted linkages 1610-1 refers to an instance of previously described linkage 110-1 having linkage configuration 110, as depicted schematically in FIG. 16. Accordingly, each co-mounted linkage of the first set of co-mounted linkages 1610-1 can have the same shape and features as previously described linkage configuration 110. Furthermore, it will be understood that the first set of co-mounted linkages 1610-1 can be used in place of linkage 110-1 in the various linkage assemblies of the preceding examples described herein.

The second set of co-mounted linkages 1610-2 includes two or more co-mounted linkages mounted in parallel with each other via first pin 118-1.1 and second pin 122-1.1. In the example of FIG. 16, the second set of co-mounted linkages 1610-2 includes three co-mounted linkages 110-2.1, 110-2.2, and 110-1.3. It will be understood that the second set of co-mounted linkages 1610-2 can include other suitable quantity of co-mounted linkages (e.g., 2, 4, 5 or more co-mounted linkages).

As depicted schematically in FIG. 16, each co-mounted linkage of the second set of co-mounted linkages 1610-2 refers to an instance of previously described linkage 110-2 having linkage configuration 110. Accordingly, each co-mounted linkage of the second set of co-mounted linkages 1610-2 can have the same shape and features as previously described linkage configuration 110. Furthermore, it will be understood that the second set of co-mounted linkages 1610-2 can be used in place of linkage 110-2 in the various linkage assemblies of the preceding examples described herein.

First pin 118-1.1 and second pin 122-1.1 of hinge 1603-1 can be used in place of and provide similar function as previously described pins 118-1 and 122-1 of FIG. 1 with respect to rotatably coupling two sets of co-mounted linkages to each other. In this context, first pin 118-1.1 and second pin 122-1.1 span each co-mounted linkage of the first set of co-mounted linkages 1610-1 and the second set of co-mounted linkages 1610-2. For example, first pin 118-1.1 passes through and is retained within first curved slot 120 formed in each co-mounted linkage of the first set of co-mounted linkages 1610-1, and passes through and is retained within first circular opening 119 formed in each co-mounted linkage of the second set of co-mounted linkages 1610-2. Second pin 122-1/1 passes through and is retained within second curved slot 124 formed in each co-mounted linkage of the first set of co-mounted linkages 1610-1, and pass through and is retained within second circular opening 123 formed in each co-mounted linkage of the second set of co-mounted linkages 1610-2.

In the example of FIG. 16, the first set of co-mounted linkages 1610-1 and the second set of co-mounted linkages 1610-2 have different quantities of co-mounted linkages. For example, the first set of co-mounted linkages 1610-1 includes four linkages, and the second set of co-mounted linkages 1610-2 includes three linkages. Furthermore, in this example, the first set of co-mounted linkages 1610-1 and the second set of co-mounted linkages 1610-2 are interspersed with each other. For example, linkage 110-2.1 is located between linkages 110-1.1 and 110-1.2, linkage 110-2.2 is located between linkages 110-1.2 and 110-1.3, and linkage 110-2.3 is located between linkages 110-1.3 and 110-1.4.

In at least some examples, each set of pin-in-slot joints that rotatably couple two sets of co-mounted linkages to each other can include spacers between linkages of the two sets. These spacers can take the form of a washer or a bushing, as examples. In the example of FIG. 16, the first set of pin-in-slot joints 1670-1 includes spacers 1618-1.1, 1618.1.2, 1618-1.3, 1618.1.4, and 1618-1.5 mounted on pin 118-1.1, and located between respective linkages of the first set of co-mounted linkages 1610-1 and the second set of co-mounted linkages 1610-2. As another example, the second set of pin-in-slot joints 1672-1 includes spacers 1622-1.1, 1622.1.2, 1622-1.3, 1622.1.4, and 1622-1.5 mounted on pin 122-1.1, and located between respective linkages of the first set of co-mounted linkages 1610-1 and the second set of co-mounted linkages 1610-2.

Linkage assembly 1600 further includes a third set of co-mounted linkages 1610-3 that is rotatably coupled to the second set of co-mounted linkages 1610-2 via a hinge 1603-2 formed by a first set of pin-in-slot joints 1670-2 and a second set of pin-in-slot joints 1672-2. Hinge 1603-2 is an example of previously described hinge 103-2 of FIG. 4. The first set of pin-in-slot joints 1670-2 and the second set of pin-in-slot joints 1672-2 of hinge 1603-2 can be similarly configured as the first set of pin-in-slot joints 1670-1 and a second set of pin-in-slot joints 1672-1 of hinge 1603-1. For example, the first set of pin-in-slot joints 1670-2 and the second set of pin-in-slot joints 1672-2 of hinge 1603-2 each include pins upon which the linkages of the second set of co-mounted linkages 1610-2 and the third set of co-mounted linkages 1610-3 are mounted. In this example, pins of the first set of pin-in-slot joints 1670-2 and the second set of pin-in-slot joints 1672-2 of hinge 1603-2 span the linkages of the second set of co-mounted linkages 1610-2 and the third set of co-mounted linkages 1610-3, and spacers can be included between linkages of the second and third sets of co-mounted linkages.

Furthermore, in this example, the third set of co-mounted linkages 1610-3 includes four co-mounted linkages that are interspersed with three co-mounted linkages of the second set of co-mounted linkages 1610-2. It will be understood that the third set of co-mounted linkages 1610-3 can include other suitable quantity of co-mounted linkages (e.g., 2, 3, 5 or more co-mounted linkages). Each co-mounted linkage of the third set of co-mounted linkages 1610-3 refers to an instance of previously described linkage 110-3 of FIG. 4. Accordingly, each co-mounted linkage of the third set of co-mounted linkages 1610-3 can have the same shape and features as linkage configuration 110.

Linkage assembly 1600 further includes a fourth set of co-mounted linkages 1610-4 that is rotatably coupled to the third set of co-mounted linkages 1610-3 via a hinge 1603-3 formed by a first set of pin-in-slot joints 1670-3 and a second set of pin-in-slot joints 1672-3. Hinge 1603-3 is an example of previously described hinge 103-3 of FIG. 4. In this example, the fourth set of co-mounted linkages 1610-4 includes three co-mounted linkages that are interspersed with four co-mounted linkages of the third set of co-mounted linkages 1610-3. It will be understood that the fourth set of co-mounted linkages 1610-4 can include other suitable quantities of co-mounted linkages (e.g., 2, 4, 5 or more co-mounted linkages). In this example, each co-mounted linkage of the fourth set of co-mounted linkages 1610-4 refers to an instance of previously described linkage 110-4 of FIG. 4. Accordingly, each co-mounted linkage of the fourth set of co-mounted linkages 1610-4 can have the same shape and features as linkage configuration 110', depicted schematically in FIG. 16.

Linkage assembly 1600 further includes a fifth set of co-mounted linkages 1630 in which each co-mounted linkage has the same shape and features as base linkage 430 of FIGS. 4 and 5. In this example, the fifth set of co-mounted linkages 1630 includes five co-mounted linkages 430-1.1, 430-1.2, 430-1.3, 430-1.4, and 430-1.5 that are interspersed with the four co-mounted linkages of the first set of co-mounted linkages 1610-1. It will be understood that the fifth set of co-mounted linkages 1610-3 can include other suitable quantity of co-mounted linkages (e.g., 2, 3, 4, 6, or more co-mounted linkages). The fifth set of co-mounted linkages 1630 is rotatably coupled to the first set of co-mounted linkages 1610-1 via a hinge 1624-1 formed by a first set of pin-in-joints 1636-1 and a first set of pin-follower joints 1638-1.

The first set of pin-in-slot joints 1636 includes a pin 440-1.1 and curved slot 442-1 formed in each instance of base linkage 430 of co-mounted linkages 1630, including co-mounted linkages 430-1.1, 430-1.2, 430-1.3, 430-1.4, and 430-1.5. Pin 440-1.1 passes through each curved slot 442-1 of co-mounted linkages 1630 and through each circular opening 123 of co-mounted linkages 1610-1. Pin 440-1.1 is retained within and can travel along curved slot 442-1 of each of the co-mounted linkages 1630 as co-mounted linkages 1610-1 are rotated relative to co-mounted linkages 1630, as previously described with reference to pin 440-1 of FIG. 5.

The first set of pin-follower joints 1638-1 includes a pin 444-1.1 and follower surface 446-1 formed in or by each instance of base linkage 430 of co-mounted linkages 1630, including co-mounted linkages 430-1.1, 430-1.2, 430-1.3, 430-1.4, and 430-1.5. Pin 444-1.1 passes through each of co-mounted linkages 1630 and through each circular opening 119 of co-mounted linkages 1610-1. Pin 444-1.1 can travel along follower surface 446-1 of each of the co-mounted linkages 1630 as co-mounted linkages 1610-1 are rotated relative to co-mounted linkages 1630, as previously described with reference to pin 444-1 of FIG. 5.

In the example of FIG. 16, linkage assembly 1600 is formed by multiple sets of co-mounted linkages in which the quantity of co-mounted linkages of each set varies, progressing in a direction along linkage chain 1606. For example, set 1630 includes five co-mounted linkages, set 1610-1 includes four co-mounted linkages, set 1610-2 includes three co-mounted linkages, set 1610-3 includes four co-mounted linkages, and set 1610-4 includes three co-mounted linkages. Thus, in this example, the quantity of co-mounted linkages of each set decreases from set 1630 containing five instances of base linkage 430 to set 1610-1 containing four instances of linkage configuration 110, and to set 1610-2 containing three instances of linkage configuration 110. In another example, a linkage assembly forming a linkage chain of multiple sets of co-mounted linkages can feature a further reduction in a quantity of co-mounted linkages among the linkage sets from three co-mounted linkages to two co-mounted linkages, and to an individual co-mounted linkage. In each of these examples, variation in the quantity of co-mounted linkages progressing in a direction along a linkage chain can be used to balance a mass of linkage assembly components with a strength of the linkage assembly at particular locations or regions within a reconfigurable structure. For example, within the context of a drop tank, such as described with reference to reference to reconfigurable structure 800, a greater quantity of co-mounted linkages can be used along a lower region of the drop tank and at an upper region of the drop tank in the vicinity of a mounting structure, whereas a lesser quantity of co-mounted linkages can be used along a side of the drop tank between the lower region and the upper region. In another example, the quantity of linkages can remain fixed along a linkage chain.

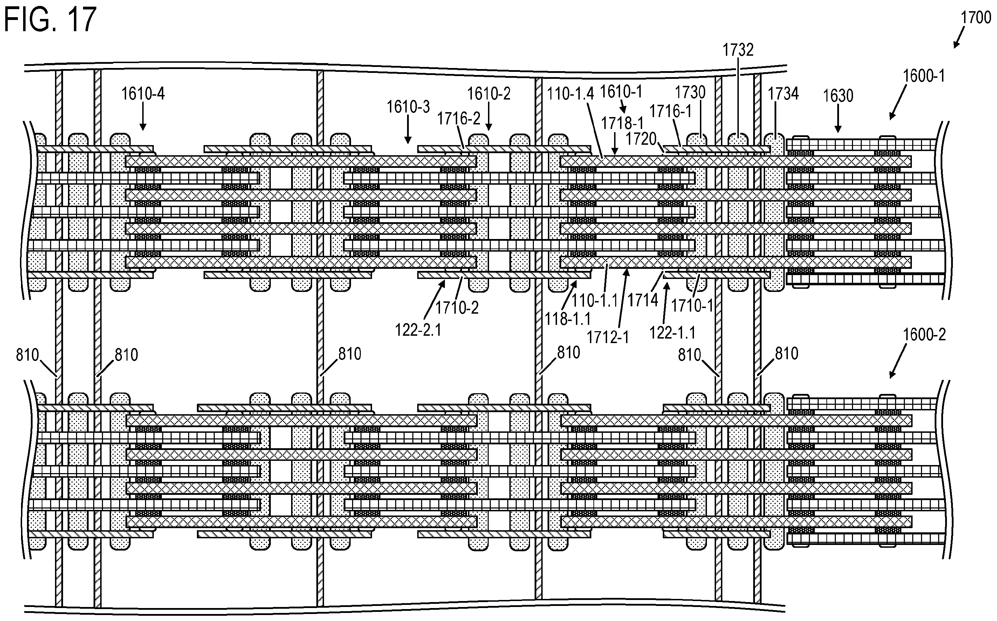

FIG. 17 depicts a portion of an example reconfigurable structure 1700 that includes multiple instances of linkage assembly 1600 of FIG. 16 that are identified by reference numerals 1600-1 and 1600-2. Within FIG. 17, the multiple instances of linkage assembly 1600 of reconfigurable structure 1700 are viewed along an axis that is orthogonal to plane of rotation 116 (shown in FIG. 1), thereby providing an edge view of the reconfigurable structure. A material layer (not shown in FIG. 17) can be mounted to the multiple instances of linkage assembly 1600 along a face of the linkage assemblies shown by the edge view in FIG. 17, such as previously described with reference to material layers 210, 480, 1316, and 1500 as examples.

In FIG. 17, the multiple instances of linkage assembly 1600 are retained in alignment with each other by previously described longitudinal supports or stringers 810 that pass through openings 470 formed in the linkages of the linkage assemblies 1600-1 and 1600-2, as previously described with reference to FIGS. 4 and 8. FIG. 17 further depicts each instance of linkage assembly 1600 including retaining brackets disposed along opposing outer faces of the outer-most linkages of each set of co-mounted linkages to retain one or more of the pins. For example, with reference to the first set of co-mounted linkages 1610-1, a first retaining bracket 1710-1 is disposed along a first outer face 1712-1 of a first outer-most linkage (e.g., 110-1.1) in which first retaining bracket 1710-1 overlaps at least a portion of a first terminal end 1714 of pin 122-1.1. Further, with reference to the first set of co-mounted linkages 1610-1, a second retaining bracket 1716-1 is disposed along a second outer face 1718-1 of a second outer-most linkage (e.g., 110-1.4) of the first set of co-mounted linkages that opposes the first outer face 1712-1. Second retaining bracket 1716-1 overlaps at least a portion of a second terminal end 1720 of first pin 122-1.1.

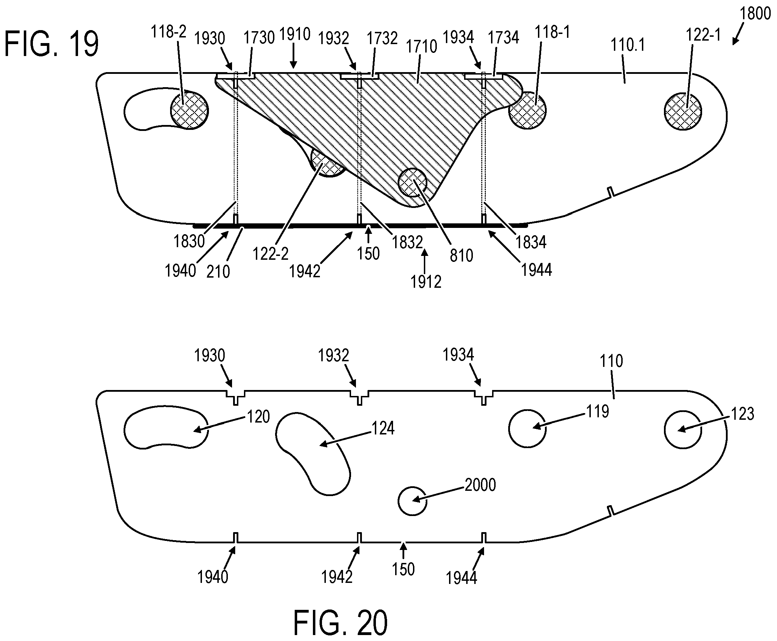

Each set of co-mounted linkages (e.g., 1610-1, 1610-2, 1610-3, 1610-4, etc.) can include a pair of retaining brackets disposed along opposing outer faces of the outer-most linkages of that set of co-mounted linkages to retain one or more pins. For example, FIG. 17 further depicts a first retaining bracket 1710-2 and a second retaining bracket 1716-2 with respect to the second set of co-mounted linkages 1610-2 for retaining pins 118-1.1 and 122-2.1. As previously described, the retaining brackets of each instance of linkage assembly 1600 can be mounted upon supports or stringers 810 that pass through openings formed in the retaining brackets, as an example of which is described with reference to FIG. 19.

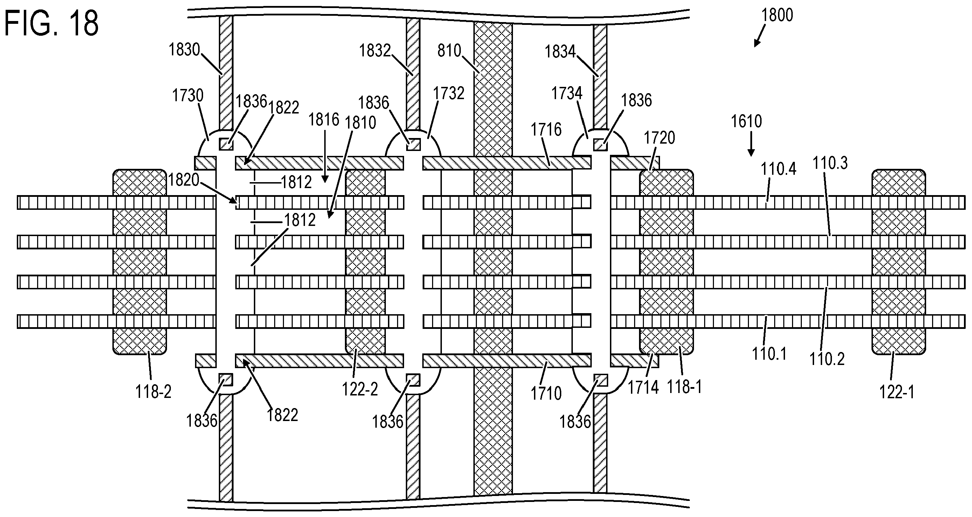

FIG. 17 further depicts each instance of linkage assembly 1600 including a plurality of spacing brackets in which each spacing bracket spans a set of co-mounted linkages. For example, with reference to the first set of co-mounted linkages 1610-1, spacing brackets 1730, 1732, and 1734 span each linkage of the first set of co-mounted linkages. As described in further detail with reference to FIG. 18, each spacing bracket includes a plurality of spacing structures in which each spacing structure projects into a respective space formed between each neighboring pair of linkages of the set of co-mounted linkages, thereby stabilizing and maintaining the relative positioning of the co-mounted linkages of that set. Furthermore, in at least some examples, the first retaining bracket and the second retaining bracket of each set of co-mounted linkages are mounted to the spacing brackets of that set to stabilize and maintain the relative positioning of the retaining brackets relative to the set of co-mounted linkages. For example, with reference to the first set of co-mounted linkages 1610-1, first retaining bracket 1710-1 and second retaining bracket 1716-1 are mounted to spacing brackets 1730, 1732, and 1734, as described in further detail with reference to FIG. 18.

FIG. 18 depicts a portion of a linkage assembly 1800 that includes a representative set of co-mounted linkages 1610. Linkage assembly 1800, including the set of co-mounted linkages 1610 can form part of previously described linkage assembly 1600 of FIG. 16 and reconfigurable structure 1700 of FIG. 17. For example, the set of co-mounted linkages 1610 can be used in place of any of sets 1610-1, 1610-2, 1610-3, and 1610-4 of FIGS. 16 and 17.

Within FIG. 18, the set of co-mounted linkages 1610 is viewed along an axis that is orthogonal to plane of rotation 116 (shown in FIG. 1) on an opposite side of the set of co-mounted linkages from the view provided in FIGS. 16 and 17. Thus, it will be understood that a material layer can be mounted on an opposing side of Linkage assembly 1800 from view provided in FIG. 18.

In the example of FIG. 18, the set of co-mounted linkages 1610 includes four co-mounted linkages 110.1, 110.2, 110.3, and 110.4, each having linkage configuration 110 or 110'. It will be understood that the set of co-mounted linkages 1610 can include other suitable quantities of co-mounted linkages (e.g., 2, 3, 5, or more co-mounted linkages).

FIG. 18 further depicts an example of a first retaining bracket 1710 disposed along a first outer face 1712 of a first outer-most linkage (e.g., 110.1) in which first retaining bracket 1710 overlaps at least a portion of a first terminal end 1714 of pin 118-1. Further, a second retaining bracket 1716 is disposed along a second outer face 1718 of a second outer-most linkage (e.g., 110.4) that opposes the first outer face 1712. Second retaining bracket 1716 overlaps at least a portion of a second terminal end 1720 of a pin 118-1 by which the set of co-mounted linkages 1610 can be rotatably coupled to a second set of co-mounted linkages. In this example, retaining brackets 1710 and 1716 also overlap at least a portion of respective terminal ends of a pin 122-2 by which the set of co-mounted linkages 1610 can be rotatably coupled to a third set of co-mounted linkages.

As previously described with reference to FIG. 17, first retaining bracket 1710 and second retaining bracket 1716 are mounted upon one or more longitudinal supports or stringers 810 that pass through an opening formed in each of the first and second retaining brackets, and through an opening formed in each linkage of the set of co-mounted linkages 1610. Additionally, first retaining bracket 1710 and second retaining bracket 1716 are mounted to spacing brackets 1730, 1732, and 1736, as described below.

As shown in FIG. 18, the set of co-mounted linkages 1610 are spaced apart from each other to provide a respective space formed between each neighboring pair of linkages of the set of co-mounted linkages. For example, a respective space 1810 is formed between linkages 110.3 and 110.4, as a neighboring pair of linkages.

FIG. 18 further depicts an example of spacing brackets 1730, 1732, and 1734 that are mounted to and span each linkage of the set of co-mounted linkages 1610. Spacing brackets 1730, 1732, and 1734 each include a plurality of spacing structures 1812 (e.g., teeth) in which each spacing structure projects into a respective space (e.g., 1810) formed between each neighboring pair of linkages of the set of co-mounted linkages 1610. As an example, neighboring pairs of spacing structures 1812 of the spacing brackets can form a keyway 1820 that accommodates a portion of a corresponding linkage of the set of co-mounted linkages 1610.

Additionally, in this example, spacing structures 1812 of spacing brackets 1730, 1732, and 1734 project into spaces formed between first retaining bracket 1710 and the outer-most linkage (e.g., 110.1) and between second retaining bracket 1716 and the other outer-most linkage (e.g., 110.4). Neighboring pairs of spacing structures 1812 of the spacing brackets can form a keyway 1822 that accommodates a portion of a corresponding retaining bracket (e.g., 1710 or 1716) on opposing sides of the set of co-mounted linkages 1610. Spacing brackets 1730, 1732, and 1734 can serve to align the set of co-mounted linkages 1610 and retaining brackets 1710 and 1716 in relation to each other.

In FIG. 18, the portion of a linkage assembly 1800 of FIG. 18 is mounted to trusses 1830, 1832, and 1834 to which other linkage assemblies can be mounted that are spaced apart from and operate in parallel with linkage assembly 1800. Such trusses can be used to secure multiple instances of a linkage assembly in a particular configuration, such as within the various reconfigurable structures described herein. As an example, trusses 1830, 1832, and 1834 are orientated parallel to support or stringers 810, such as depicted in FIG. 18. In at least some implementations, trusses 1830, 1832, and 1834 can take the form of an intermediate structure that is disposed between a material layer and the linkages of linkage assembly 1800, such as previously described with reference to truss 1510 of FIG. 8. To mount the trusses to linkage assembly 1800, spacing brackets 1730, 1732, and 1734 each define a keyway 1836 on either side of the set of co-mounted linkages 1610 that accommodates a keyed portion of trusses 1830, 1832, and 1834 to thereby stabilize and align the trusses. Additional features of trusses 1830, 1832, 1834 are described in further detail with reference to FIG. 19.

FIG. 19 depicts a view of linkage assembly 1800 along an axis that is parallel to longitudinal supports or stringers 810 and to trusses 1830, 1832, and 1834 of FIG. 18, thereby showing a side view of retaining bracket 1710 and linkage 110.1 of the set of co-mounted linkages 1610. In FIG. 19, trusses 1830, 1832, and 1834 are depicted with broken lines to reveal additional features of linkage 110.1 and retaining bracket 1710. As an example, each linkage of the set of co-mounted linkages 1610, including linkage 110.1 can include a first set of keyways 1930, 1932, and 1934 on a rear-facing side 1910 of the linkage from a material layer (e.g., 210) that accommodate spacing brackets 1730, 1732, and 1734, respectively.

The first set of keyways 1930, 1932, and 1934 can also accommodate a portion of trusses 1830, 1832, and 1834, respectively, thereby enabling the trusses to form continuous a continuous structure that spans a plurality of parallel linkage assemblies. Each linkage of the set of co-mounted linkages 1610, including linkage 110.1 can include a second set of keyways 1940, 1942, and 1944 on a front-facing side 1912 of the linkage that faces the material layer (e.g., 210) and that accommodate a portion of trusses 1830, 1832, and 1834, respectively, thereby enabling the trusses to form a continuous structure that spans a plurality of parallel linkage assemblies. In the example of FIG. 19, trusses 1830, 1832, and 1834 are configured to span a distance between front-facing side 1912 and rear-facing side 1910 of the linkage. It will be understood that trusses can have other suitable configurations.

FIG. 20 depicts an example of previously described linkage configuration 110 of FIG. 1 incorporating the first set of keyways 1930, 1932, and 1934, and the second set of keyways 1940, 1942, and 1944 of FIG. 19. For example, each linkage of the set of linkages 1610, including linkage 110.1 of FIG. 19 can represent an instance of linkage 110 shown in FIG. 20. FIG. 20 further depicts an example of a circular opening 2000 that accommodates longitudinal supports or stringer 810. While the first and second sets of keyways are depicted as each including three keyways in the examples of FIGS. 19 and 20, it will be understood that linkage configurations 110 and 110' of FIG. 1 can incorporate fewer or greater quantities of keyways to accommodate any suitable quantity of trusses and spacing brackets.

Furthermore, the following non-limiting examples compatible with the claimed subject matter may be proposed.

**In** the claimed linkage assembly, the material layer may be formed from a metal.

The linkage assembly may further comprise: a spacing bracket that spans each linkage of the first set of co-mounted linkages; wherein the spacing bracket includes a plurality of spacing structures in which each spacing structure projects into a respective space formed between each neighboring pair of linkages of the first set of co-mounted linkages; and wherein the first retaining bracket and the second retaining bracket are mounted to the spacing bracket.

**In** the claimed reconfigurable structure, the common radius center may be located on a centerline of the material layer.

The reconfigurable structure may form at least a portion of a fluid vessel, a conduit, an airfoil, a hydrofoil, a control surface, or a wheel.

It will be understood that the configurations and/or approaches described herein are exemplary in nature, and that these specific embodiments or examples are not to be considered in a limiting sense, because numerous variations are possible. The scope is defined by the appended claims.

## Claims

1. A linkage assembly (1600), comprising:
a first set of co-mounted linkages (1610-1) rotatably coupled to a second set of co-mounted linkages (1610-2) via a hinge (1603-1) formed by a first set of pin-in-slot joints (1670-1) and a second set of pin-in-slot joints (1672-1);
wherein the first set of co-mounted linkages (1610-1) includes two or more linkages (110.1.1, 110.1.2) mounted in parallel with each other via a first pin (118-1.1) of the first set of pin-in-slot joints (1670-1) and a second pin (122-1.1) of the second set of pin-in-slot joints (1672-1);
wherein the second set of co-mounted linkages (1610-2) includes two or more linkages (110-2.1, 110-2.2) mounted in parallel with each other via the first pin (118-1.1) and the second pin (122-1.1);
wherein the first pin (118-1.1) is retained within a respective first curved slot (120-1) formed in each linkage of the first set of co-mounted linkages (1610-1) or the second set of co-mounted linkages (1610-2);
wherein the second pin (122-1.1) is retained within a respective second curved slot (124-1) formed in each linkage of the first set of co-mounted linkages (1610-1) or the second set of co-mounted linkages (1610-2); and
a material layer (210, 480) mounted to an exterior edge of the first set of co-mounted linkages (1610-1) and the second set of co-mounted linkages (1610-2),
wherein the material layer (210, 480) is configured to maintain a constant length across a range of motion of the first set of co-mounted linkages (1610-1) and the second set of co-mounted linkages (1610-2) relative to each other within a plane of rotation (116).

2. The linkage assembly (1600) of claim 1, wherein the first curved slot (120-1) of each linkage of the first set of co-mounted linkages (1610-1) or the second set of co-mounted linkages (1610-2) forms an arc segment of a first circle (132), and the second curved slot (124-1) of each linkage of the first set of co-mounted linkages (1610-1) or the second set of co-mounted linkages (1610-2) forms an arc segment of a second circle (136); and
wherein the first circle (132) and the second circle (136) have a common radius center (142-1) that is located on or within the material layer (210, 480) across the range of motion of the linkages of the first set of co-mounted linkages (1610-1) and the second set of co-mounted linkages (1610-2).

3. The linkage assembly (1600) of claim 2, wherein the common radius center (142-1) is located on a centerline (222) of the material layer (210, 480) within the plane of rotation (116).

4. The linkage assembly (1600) of claim 2 or 3, wherein the first circle (132) and the second circle (136) are concentric; and
wherein the first curved slot (120-1) and the second curved slot (124-1) define the same angular range of displacement.

5. The linkage assembly (1600) of any one of claims 1 to 4, wherein the first set of co-mounted linkages (1610-1) includes a different quantity of linkages than the second set of co-mounted linkages (1610-2).

6. The linkage assembly (1600) of any one of claims 1 to 5, wherein the first set of co-mounted linkages (1610-1) are spaced apart from each other;
wherein the second set of co-mounted linkages (1610-2) are spaced apart from each other; and
wherein the first set of co-mounted linkages (1610-1) and the second set of co-mounted linkages (1610-2) are interspersed with each other.

7. The linkage assembly (1600) of any one of claims 1 to 6, further comprising:
a spacing bracket (1730) that spans each linkage (110.1.1, 110.1.2) of the first set of co-mounted linkages (1610-1),
wherein the spacing bracket (1730) includes a plurality of spacing structures (1812) in which each spacing structure (1812) projects into a respective space (1810) formed between each neighboring pair of linkages (110.1.1, 110.1.2) of the first set of co-mounted linkages (1610-1).

8. The linkage assembly (1600) of any one of claims 1 to 7, further comprising:
a first retaining bracket (1710) disposed along a first outer face (1712-1) of a first outer-most linkage (110.1) of the first set of co-mounted linkages (1610-1), wherein the first retaining bracket (1710) overlaps at least a portion of a first terminal end (1714) of the first pin (118-1.1); and
a second retaining bracket (1716) disposed along a second outer face (1718-1) of a second outer-most linkage (110.4) of the first set of co-mounted linkages (1610-1) that opposes the first outer face (1712-1), wherein the second retaining bracket (1716) overlaps at least a portion of a second terminal end (1720) of the first pin (118-1.1).

9. The linkage assembly (1600) of claim 8 when dependent on claim 7, wherein the first retaining bracket (1710) and the second retaining bracket (1716) are mounted to the spacing bracket (1730).

10. The linkage assembly (1600) of any one of claims 1 to 9, wherein the material layer (210, 480) forms a convex shape (214) in a first configuration (200) in which the first set of co-mounted linkages (1610-1) and the second set of co-mounted linkages (1610-2) are angled relative to each other; and
wherein the material layer (210, 480) forms a flattened shape (314) in a second configuration (300) in which the exterior edge (146) of the first set of co-mounted linkages (1610-1) and the second set of co-mounted linkages (1610-2) is located along an axis (154).

11. A reconfigurable structure (1700), comprising:
a plurality of linkage assemblies (1600-1, 1600-2) according to claim 1, the plurality of linkage assemblies (1600-1, 1600-2) being spaced apart from each other along a longitudinal axis (802),
wherein the material layer (210, 480) mounted to the exterior edge of the first set of co-mounted linkages (1610-1) and the second set of co-mounted linkages (1610-2) of each of the plurality of linkage assemblies (1600-1, 1600-2), and
wherein the material layer (210, 480) is configured to maintain the constant length across the range of motion of the first set of co-mounted linkages (1610-1) and the second set of co-mounted linkages (1610-2) relative to each other within the plane of rotation (116) of each linkage assembly (1600) of the plurality of linkage assemblies (1600-1, 1600-2).

12. The reconfigurable structure (1700) of claim 11, wherein the first curved slot (120-1) forms an arc segment of a first circle (132), and the second curved slot (124-1) forms an arc segment of a second circle (136);
wherein the first circle (132) and the second circle (136) have a common radius center (142-1) that is located on or within the material layer (210, 480).

13. The reconfigurable structure (1700) of claim 12, wherein the first circle (132) and the second circle (136) are concentric; and
wherein the first curved slot (120-1) and the second curved slot (124-1) define the same angular range of displacement.

14. The reconfigurable structure (1700) of any one of claims 11 to 13, wherein the material layer (210, 480) forms a convex shape (214) in a first configuration (200) in which the first set of co-mounted linkages (1610-1) and the second set of co-mounted linkages (1610-2) of each linkage assembly (1600) are angled relative to each other along the exterior edge (146) of that linkage assembly (1600); and
wherein the material layer (210, 480) forms a flattened shape (314) in a second configuration (300) in which the exterior edge (146) of the first set of co-mounted linkages (1610-1) and the second set of co-mounted linkages (1610-2) of each linkage assembly (1600) is located along an axis (154).

15. The reconfigurable structure (1700) of claim 14, wherein in the first configuration (200), the material layer (210, 480) is configured to form an annular tube shape (402), wherein:
a first end cap (1010) is mounted to a first terminal end (912) of the annular tube shape (402) of the material layer (210, 480);
a second end cap (1012) is mounted to a second terminal end (914) of the annular tube shape (402) of the material layer (210, 480); and
a spine (460) is coupled to each of the plurality of linkage assemblies (1600-1, 1600-2) along the longitudinal axis (802), the spine (460) is configured to span the annular tube shape (402).

## Patentansprüche

1. Gestängeanordnung (1600), umfassend:
einen ersten Satz gemeinsam montierter Gestänge (1610-1), welcher mit einem zweiten Satz gemeinsam montierter Gestänge (1610-2) über ein Scharnier (1603-1) drehbar gekoppelt ist, welches durch einen ersten Satz von Stift-in-Schlitz-Gelenken (1670-1) und einen zweiten Satz von Stift-in-Schlitz-Gelenken (1672-1) gebildet ist;
wobei der erste Satz gemeinsam montierter Gestänge (1610-1) zwei oder mehr Gestänge (110.1.1, 110.1.2) aufweist, welche parallel zueinander über einen ersten Stift (118-1.1) des ersten Satzes von Stift-in-Schlitz-Gelenken (1670-1) und einen zweiten Stift (122-1.1) des zweiten Satzes von Stift-in-Schlitz-Gelenken (1672-1) montiert sind;
wobei der zweite Satz gemeinsam montierter Gestänge (1610-2) zwei oder mehr Gestänge (110-2.1, 110-2.2) aufweist, welche parallel zueinander über den ersten Stift (118-1.1) und den zweiten Stift (122-1.1) montiert sind;
wobei der erste Stift (118-1.1) in einem jeweiligen ersten gekrümmten Schlitz (120-1) aufgenommen ist, welcher in jedem Gestänge des ersten Satzes gemeinsam montierter Gestänge (1610-1) oder des zweiten Satzes gemeinsam montierter Gestänge (1610-2) gebildet ist;
wobei der zweite Stift (122-1.1) in einem jeweiligen zweiten gekrümmten Schlitz (124-1) aufgenommen ist, welcher in jedem Gestänge des ersten Satzes gemeinsam montierter Gestänge (1610-1) oder des zweiten Satzes gemeinsam montierter Gestänge (1610-2) gebildet ist; und
eine Materiallage (210, 480), welche an einem äußeren Rand des ersten Satzes gemeinsam montierter Gestänge (1610-1) und des zweiten Satzes gemeinsam montierter Gestänge (1610-2) montiert ist,
wobei die Materiallage (210, 480) dazu eingerichtet ist, eine konstante Länge über einen Bewegungsbereich des ersten Satzes gemeinsam montierter Gestänge (1610-1) und des zweiten Satzes gemeinsam montierter Gestänge (1610-2) relativ zueinander innerhalb einer Rotationsebene (116) beizubehalten.

2. Gestängeanordnung (1600) nach Anspruch 1, wobei der erste gekrümmte Schlitz (120-1) jedes Gestänges des ersten Satzes gemeinsam montierter Gestänge (1610-1) oder des zweiten Satzes gemeinsam montierter Gestänge (1610-2) ein Bogensegment eines ersten Kreises (132) bildet, und der zweite gekrümmte Schlitz (124-1) jedes Gestänges des ersten Satzes gemeinsam montierter Gestänge (1610-1) oder des zweiten Satzes gemeinsam montierter Gestänge (1610-2) ein Bogensegment eines zweiten Kreises (136) bildet; und
wobei der erste Kreis (132) und der zweite Kreis (136) einen gemeinsamen Radiusmittelpunkt (142-1) aufweisen, welcher auf oder innerhalb der Materiallage (210, 480) über den Bewegungsbereich der Gestänge des ersten Satzes gemeinsam montierter Gestänge (1610-1) und des zweiten Satzes gemeinsam montierter Gestänge (1610-2) liegt.

3. Gestängeanordnung (1600) nach Anspruch 2, wobei der gemeinsame Radiusmittelpunkt (142-1) auf einer Mittellinie (222) der Materiallage (210, 480) innerhalb der Rotationsebene (116) liegt.

4. Gestängeanordnung (1600) nach Anspruch 2 oder 3, wobei der erste Kreis (132) und der zweite Kreis (136) konzentrisch sind; und
wobei der erste gekrümmte Schlitz (120-1) und der zweite gekrümmte Schlitz (124-1) den gleichen Winkelbereich einer Verschiebung definieren.

5. Gestängeanordnung (1600) nach einem der Ansprüche 1 bis 4, wobei der erste Satz gemeinsam montierter Gestänge (1610-1) eine andere Anzahl von Gestängen aufweist als der zweite Satz gemeinsam montierter Gestänge (1610-2).

6. Gestängeanordnung (1600) nach einem der Ansprüche 1 bis 5, wobei der erste Satz gemeinsam montierter Gestänge (1610-1) voneinander beabstandet ist;
wobei der zweite Satz gemeinsam montierter Gestänge (1610-2) voneinander beabstandet ist; und
wobei der erste Satz gemeinsam montierter Gestänge (1610-1) und der zweite Satz gemeinsam montierter Gestänge (1610-2) einander durchsetzen.

7. Gestängeanordnung (1600) nach einem der Ansprüche 1 bis 6, ferner umfassend:
eine Abstandshalterung (1730), welche sich über jedes Gestänge (110.1.1, 110.1.2) des ersten Satzes gemeinsam montierter Gestänge (1610-1) erstreckt,
wobei die Abstandshalterung (1730) eine Mehrzahl von Abstandsstrukturen (1812) aufweist, in welcher jede Abstandsstruktur (1812) in einen jeweiligen Zwischenraum (1810) ragt, welcher zwischen jedem benachbarten Paar von Gestängen (110.1.1, 110.1.2) des ersten Satzes gemeinsam montierter Gestänge (1610-1) gebildet ist.

8. Gestängeanordnung (1600) nach einem der Ansprüche 1 bis 7, ferner umfassend:
eine erste Haltehalterung (1710), welche entlang einer ersten Außenfläche (1712-1) eines ersten äußersten Gestänges (110.1) des ersten Satzes gemeinsam montierter Gestänge (1610-1) angeordnet ist, wobei die erste Haltehalterung (1710) wenigstens einen Abschnitt eines ersten Endabschnitts (1714) des ersten Stifts (118-1.1) überlappt; und
eine zweite Haltehalterung (1716), welche entlang einer zweiten Außenfläche (1718-1) eines zweiten äußersten Gestänges (110.4) des ersten Satzes gemeinsam montierter Gestänge (1610-1) angeordnet ist, welches der ersten Außenfläche (1712-1) gegenüberliegt, wobei die zweite Haltehalterung (1716) wenigstens einen Abschnitt eines zweiten Endabschnitts (1720) des ersten Stifts (118-1.1) überlappt.

9. Gestängeanordnung (1600) nach Anspruch 8, sofern abhängig von Anspruch 7, wobei die erste Haltehalterung (1710) und die zweite Haltehalterung (1716) an der Abstandshalterung (1730) montiert sind.

10. Gestängeanordnung (1600) nach einem der Ansprüche 1 bis 9, wobei die Materiallage (210, 480) eine konvexe Form (214) in einer ersten Konfiguration (200) bildet, in welcher der erste Satz gemeinsam montierter Gestänge (1610-1) und der zweite Satz gemeinsam montierter Gestänge (1610-2) relativ zueinander angewinkelt sind; und
wobei die Materiallage (210, 480) eine abgeflachte Form (314) in einer zweiten Konfiguration (300) bildet, in welcher der äußere Rand (146) des ersten Satzes gemeinsam montierter Gestänge (1610-1) und des zweiten Satzes gemeinsam montierter Gestänge (1610-2) entlang einer Achse (154) liegt.

11. Rekonfigurierbare Struktur (1700), umfassend:
eine Mehrzahl von Gestängeanordnungen (1600-1, 1600-2) nach Anspruch 1, wobei die Mehrzahl von Gestängeanordnungen (1600-1, 1600-2) entlang einer Längsachse (802) voneinander beabstandet ist,
wobei die Materiallage (210, 480), welche an dem äußeren Rand des ersten Satzes gemeinsam montierter Gestänge (1610-1) und des zweiten Satzes gemeinsam montierter Gestänge (1610-2) jeder der Mehrzahl von Gestängeanordnungen (1600-1, 1600-2) montiert ist, und
wobei die Materiallage (210, 480) dazu eingerichtet ist, die konstante Länge über den Bewegungsbereich des ersten Satzes gemeinsam montierter Gestänge (1610-1) und des zweiten Satzes gemeinsam montierter Gestänge (1610-2) relativ zueinander innerhalb der Rotationsebene (116) jeder Gestängeanordnung (1600) der Mehrzahl von Gestängeanordnungen (1600-1, 1600-2) beizubehalten.

12. Rekonfigurierbare Struktur (1700) nach Anspruch 11, wobei der erste gekrümmte Schlitz (120-1) ein Bogensegment eines ersten Kreises (132) bildet, und der zweite gekrümmte Schlitz (124-1) ein Bogensegment eines zweiten Kreises (136) bildet;
wobei der erste Kreis (132) und der zweite Kreis (136) einen gemeinsamen Radiusmittelpunkt (142-1) aufweisen, welcher auf oder innerhalb der Materiallage (210, 480) liegt.

13. Rekonfigurierbare Struktur (1700) nach Anspruch 12, wobei der erste Kreis (132) und der zweite Kreis (136) konzentrisch sind; und
wobei der erste gekrümmte Schlitz (120-1) und der zweite gekrümmte Schlitz (124-1) den gleichen Winkelbereich einer Verschiebung definieren.

14. Rekonfigurierbare Struktur (1700) nach einem der Ansprüche 11 bis 13, wobei die Materiallage (210, 480) eine konvexe Form (214) in einer ersten Konfiguration (200) bildet, in welcher der erste Satz gemeinsam montierter Gestänge (1610-1) und der zweite Satz gemeinsam montierter Gestänge (1610-2) jeder Gestängeanordnung (1600) relativ zueinander entlang des äußeren Randes (146) dieser Gestängeanordnung (1600) angewinkelt sind; und
wobei die Materiallage (210, 480) eine abgeflachte Form (314) in einer zweiten Konfiguration (300) bildet, in welcher der äußere Rand (146) des ersten Satzes gemeinsam montierter Gestänge (1610-1) und des zweiten Satzes gemeinsam montierter Gestänge (1610-2) jeder Gestängeanordnung (1600) entlang einer Achse (154) liegt.

15. Rekonfigurierbare Struktur (1700) nach Anspruch 14, wobei in der ersten Konfiguration (200) die Materiallage (210, 480) dazu eingerichtet ist, eine ringförmige Rohrform (402) zu bilden, wobei:
eine erste Endkappe (1010) an einem ersten Endabschnitt (912) der ringförmigen Rohrform (402) der Materiallage (210, 480) montiert ist;
eine zweite Endkappe (1012) an einem zweiten Endabschnitt (914) der ringförmigen Rohrform (402) der Materiallage (210, 480) montiert ist; und
ein Grat (460) mit jeder der Mehrzahl von Gestängeanordnungen (1600-1, 1600-2) entlang der Längsachse (802) gekoppelt ist, wobei der Grat (460) dazu eingerichtet ist, die ringförmige Rohrform (402) zu überspannen.

## Revendications

1. Ensemble de liaison (1600), comprenant :
un premier jeu de liaisons comontées (1610-1) couplées en rotation à un second jeu de liaisons comontées (1610-2) via une charnière (1603-1) formée par un premier jeu de joints à broche dans une fente (1670-1) et un second jeu de joints à broche dans une fente (1672-1) ;
dans lequel le premier jeu de liaisons comontées (1610-1) comporte deux liaisons (110.1.1, 110.1.2) ou plus montées en parallèle l'une avec l'autre via une première broche (118-1.1) du premier jeu de joints à broche dans une fente (1670-1) et une seconde broche (122-1.1) du second jeu de joints à broche dans une fente (1672-1) ;
dans lequel le second jeu de liaisons comontées (1610-2) comporte deux liaisons (110-2.1, 110-2.2) ou plus montées en parallèle l'une avec l'autre via la première broche (118-1.1) et la seconde broche (122-1.1) ;
dans lequel la première broche (118-1.1) est retenue au sein d'une première fente courbée (120-1) respective formée dans chaque liaison du premier jeu de liaisons comontées (1610-1) ou du second jeu de liaisons comontées (1610-2) ;
dans lequel la seconde broche (122-1.1) est retenue au sein d'une seconde fente courbée (124-1) respective formée dans chaque liaison du premier jeu de liaisons comontées (1610-1) ou du second jeu de liaisons comontées (1610-2) ; et
une couche de matériau (210, 480) montée sur un bord extérieur du premier jeu de liaisons comontées (1610-1) et du second jeu de liaisons comontées (1610-2),
dans lequel la couche de matériau (210, 480) est configurée pour maintenir une longueur constante sur une plage de mouvement du premier jeu de liaisons comontées (1610-1) et du second jeu de liaisons comontées (1610-2) l'une par rapport à l'autre dans un plan de rotation (116).

2. Ensemble de liaison (1600) selon la revendication 1, dans lequel la première fente courbée (120-1) de chaque liaison du premier jeu de liaisons comontées (1610-1) ou du second jeu de liaisons comontées (1610-2) forme un segment d'arc d'un premier cercle (132), et la seconde fente courbée (124-1) de chaque liaison du premier jeu de liaisons comontées (1610-1) ou du second jeu de liaisons comontées (1610-2) forme un segment d'arc d'un second cercle (136) ; et
dans lequel le premier cercle (132) et le second cercle (136) ont un centre de rayon commun (142-1) qui est situé sur ou à l'intérieur de la couche de matériau (210, 480) sur la plage de mouvement des liaisons du premier jeu de liaisons comontées (1610-1) et du second jeu de liaisons comontées (1610-2).

3. Ensemble de liaison (1600) selon la revendication 2, dans lequel le centre de rayon commun (142-1) est situé sur une ligne centrale (222) de la couche de matériau (210, 480) dans le plan de rotation (116).

4. Ensemble de liaison (1600) selon la revendication 2 ou 3, dans lequel le premier cercle (132) et le second cercle (136) sont concentriques ; et
dans lequel la première fente courbée (120-1) et la seconde fente courbée (124-1) définissent la même plage angulaire de déplacement.

5. Ensemble de liaison (1600) selon l'une quelconque des revendications 1 à 4, dans lequel le premier jeu de liaisons comontées (1610-1) comporte une quantité différente de liaisons que le second jeu de liaisons comontées (1610-2).

6. Ensemble de liaison (1600) selon l'une quelconque des revendications 1 à 5, dans lequel le premier jeu de liaisons comontées (1610-1) sont espacées les unes des autres ;
dans lequel le second jeu de liaisons comontées (1610-2) sont espacées les unes des autres ; et
dans lequel le premier jeu de liaisons comontées (1610-1) et le second jeu de liaisons comontées (1610-2) sont intercalés l'un avec l'autre.

7. Ensemble de liaison (1600) selon l'une quelconque des revendications 1 à 6, comprenant en outre :
un support d'espacement (1730) qui s'étend sur chaque liaison (110.1.1, 110.1.2) du premier jeu de liaisons comontées (1610-1),
dans lequel le support d'espacement (1730) comporte une pluralité de structures d'espacement (1812) dans lesquelles chaque structure d'espacement (1812) fait saillie dans un espace (1810) respectif formé entre chaque paire de liaisons (110.1.1, 110.1.2) voisines du premier jeu de liaisons comontées (1610-1).

8. Ensemble de liaison (1600) selon l'une quelconque des revendications 1 à 7, comprenant en outre :
un premier support de retenue (1710) disposé le long d'une première face extérieure (1712-1) d'une première liaison la plus extérieure (110.1) du premier jeu de liaisons comontées (1610-1), dans lequel le premier support de retenue (1710) chevauche au moins une partie d'une première extrémité terminale (1714) de la première broche (118-1.1) ; et
un second support de retenue (1716) disposé le long d'une seconde face extérieure (1718-1) d'une seconde liaison la plus extérieure (110.4) du premier jeu de liaisons comontées (1610-1) qui s'oppose à la première face extérieure (1712-1), dans lequel le second support de retenue (1716) chevauche au moins une partie d'une seconde extrémité terminale (1720) de la première broche (118-1.1).

9. Ensemble de liaison (1600) selon la revendication 8 lorsqu'il dépend de la revendication 7, dans lequel le premier support de retenue (1710) et le second support de retenue (1716) sont montés sur le support d'espacement (1730).

10. Ensemble de liaison (1600) selon l'une quelconque des revendications 1 à 9, dans lequel la couche de matériau (210, 480) forme une forme convexe (214) dans une première configuration (200) dans laquelle le premier jeu de liaisons comontées (1610-1) et le second jeu de liaisons comontées (1610-2) sont inclinés l'un par rapport à l'autre ; et
dans lequel la couche de matériau (210, 480) forme une forme aplatie (314) dans une seconde configuration (300) dans laquelle le bord extérieur (146) du premier jeu de liaisons comontées (1610-1) et du second jeu de liaisons comontées (1610-2) est situé le long d'un axe (154).

11. Structure reconfigurable (1700), comprenant :
une pluralité d'ensembles de liaison (1600-1, 1600-2) selon la revendication 1, la pluralité d'ensembles de liaison (1600-1, 1600-2) étant espacés les uns des autres le long d'un axe longitudinal (802),
dans laquelle la couche de matériau (210, 480) montée sur le bord extérieur du premier jeu de liaisons comontées (1610-1) et du second jeu de liaisons comontées (1610-2) de chacun de la pluralité d'ensembles de liaisons (1600-1, 1600-2), et
dans laquelle la couche de matériau (210, 480) est configurée pour maintenir la longueur constante sur la plage de mouvement du premier jeu de liaisons comontées (1610-1) et du second jeu de liaisons comontées (1610-2) l'une par rapport à l'autre dans le plan de rotation (116) de chaque ensemble de liaison (1600) de la pluralité d'ensembles de liaisons (1600-1, 1600-2).

12. Structure reconfigurable (1700) selon la revendication 11, dans laquelle la première fente courbée (120-1) forme un segment d'arc d'un premier cercle (132) et la seconde fente courbée (124-1) forme un segment d'arc d'un second cercle (136) ;
dans laquelle le premier cercle (132) et le second cercle (136) ont un centre de rayon commun (142-1) qui est situé sur ou à l'intérieur de la couche de matériau (210, 480).

13. Structure reconfigurable (1700) selon la revendication 12, dans laquelle le premier cercle (132) et le second cercle (136) sont concentriques ; et
dans lequel la première fente courbée (120-1) et la seconde fente courbée (124-1) définissent la même plage angulaire de déplacement.

14. Structure reconfigurable (1700) selon l'une quelconque des revendications 11 à 13, dans laquelle la couche de matériau (210, 480) forme une forme convexe (214) dans une première configuration (200) dans laquelle le premier jeu de liaisons comontées (1610-1) et le second jeu de liaisons comontées (1610-2) de chaque ensemble de liaison (1600) sont inclinés l'un par rapport à l'autre le long du bord extérieur (146) de cet ensemble de liaison (1600) ; et
dans laquelle la couche de matériau (210, 480) forme une forme aplatie (314) dans une seconde configuration (300) dans laquelle le bord extérieur (146) du premier jeu de liaisons comontées (1610-1) et du second jeu de liaisons comontées (1610-2) de chaque ensemble de liaison (1600) est situé le long d'un axe (154).

15. Structure reconfigurable (1700) selon la revendication 14, dans laquelle dans la première configuration (200), la couche de matériau (210, 480) est configurée pour former une forme de tube annulaire (402), dans laquelle :
un premier capuchon d'extrémité (1010) est monté sur une première extrémité terminale (912) de la forme de tube annulaire (402) de la couche de matériau (210, 480) ;
un second capuchon d'extrémité (1012) est monté sur une seconde extrémité terminale (914) de la forme de tube annulaire (402) de la couche de matériau (210, 480) ; et
une colonne (460) est couplée à chacun de la pluralité d'ensembles de liaison (1600-1, 1600-2) le long de l'axe longitudinal (802), la colonne (460) est configurée pour s'étendre sur la forme de tube annulaire (402).
